(19) Europäisches Patentamt
European Patent Office
Office européen des brevets

(11) EP 1 248 123 A2

(12) **EUROPEAN PATENT APPLICATION**

(43) Date of publication:
**09.10.2002 Bulletin 2002/41**

(51) Int Cl.⁷: **G02B 6/12**

(21) Application number: **02007343.3**

(22) Date of filing: **05.04.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **06.04.2001 JP 2001108414**
**06.04.2001 JP 2001108475**

(71) Applicant: **Nippon Sheet Glass Co., Ltd.**
**Osaka-shi, Osaka (JP)**

(72) Inventors:
- **Kittaka, Shigeo**
  **Chuo-ku, Osaka-shi, Osaka (JP)**
- **Nara, Masatoshi**
  **Chuo-ku, Osaka-shi, Osaka (JP)**
- **Koyama, Tadashi**
  **Chuo-ku, Osaka-shi, Osaka (JP)**
- **Asai, Takahiro**
  **Chuo-ku, Osaka-shi, Osaka (JP)**

(74) Representative: **HOFFMANN - EITLE**
**Patent- und Rechtsanwälte**
**Arabellastrasse 4**
**81925 München (DE)**

(54) **Photonic crystal for wavelength multiplexing**

(57) The invention provides an optical device using two- or three-dimensional photonic crystal having a repeatedly periodic structure (1) in two or three different directions. The photonic crystal in this optical device is processed into a prism structure (5) or a blazed diffraction grating structure.

FIG.1

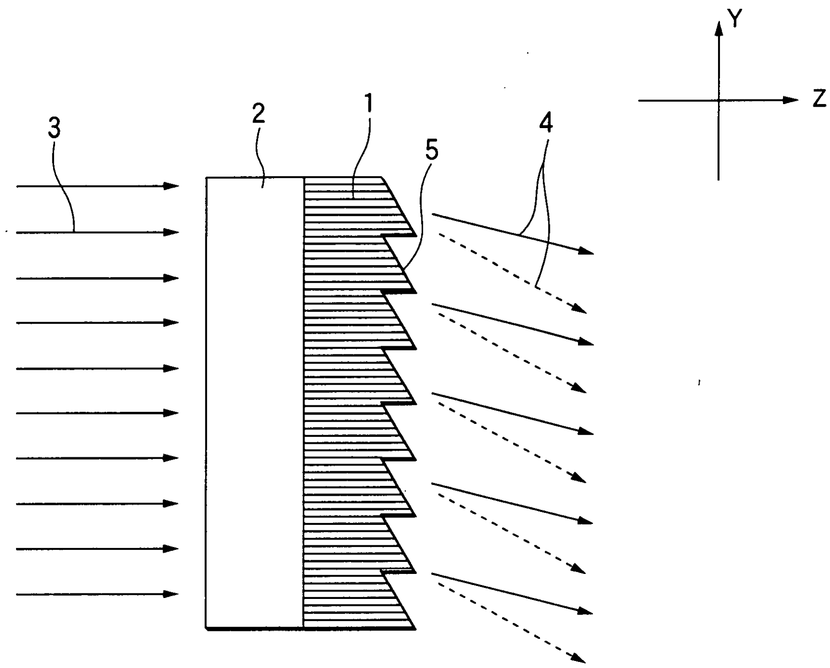


EP 1 248 123 A2

## Description

### BACKGROUND OF THE INVENTION

#### Field of the Invention

The present invention relates to a spectroscopic optical device for separating light beams with different wavelengths or a polarized light separating optical device for separating light beams polarized in different directions and particularly relates to these optical devices using two-dimensional or three-dimensional photonic crystal. The present invention also relates to optical information recording and particularly relates to an optically recording optical system which can write and read a large capacity of information at a high speed by wavelength multiplexing.

#### Related Art

I. In recent years, increase in capacity of an optical fiber communication network has been strongly demanded because of the rapid advance of popularization of the Internet. Development of wavelength division multiplexing (WDM) communication as a way to increase the capacity has been advanced rapidly. An optically functional device such as an optical demultiplexer, a filter or an isolator good in wavelength selectivity is necessary for such WDM communication because beam components with slightly different wavelengths are used for transferring different kinds of information individually. It is a matter of course that the functional device is strongly demanded in terms of manufacturability, reduction in size, integration in density, stability, and so on.

An optical demultiplexer (or a spectroscope) is used for artificially demultiplexing/detecting a multiplexed optical signal with a plurality of wavelengths in wavelength multiplexing communication or for spectrally analyzing light to be measured in spectral measurement. The optical demultiplexer needs a spectroscopic device such as a prism, a wave filter or a diffraction grating. Especially, the diffraction grating is a typical spectroscopic device. A device having a periodically and finely corrugated structure formed on a surface of a quartz or silicone substrate is used as the diffraction grating. Diffracted light beams generated by the periodically and finely corrugated structure interfere with each other, so that light beams with specific wavelengths are emitted in specific directions respectively. This characteristic is used as a spectroscopic device.

Fig. 19 shows an example of a spectroscopic optical system using a diffraction grating. A wavelength-multiplexed light beam 30 emitted from an optical fiber 21 is collimated as parallel light beams 31 by a collimator lens 22. The parallel light beams 31 are made incident on a diffraction grating 23. The light beams are demultiplexed by the diffraction grating 23, so that the demultiplexed beams emerge at different emergent angles in accordance with the wavelengths. The emergent light beams 32 pass through the collimator lens 22 again and form condensed light spot groups 40 on a light-receiving surface 24. When photo detectors such as photo diodes or end surfaces of optical fibers are disposed as light-receiving units in the positions of the condensed light spots respectively, separate signal outputs can be obtained in accordance with predetermined wavelengths respectively. In addition, when light incident on the diffraction gratinghas a continuous spectrum, outputs made discrete spectrally in accordance with the interval of the light-receiving units disposed on the light-receiving surface can be obtained.

In the case of a reflective diffraction grating, there is given the following equation:

$$\sin\theta i \div \sin\theta o = m\lambda/d$$

in which m is the order of diffraction in the diffraction grating, d is a grating constant, $\lambda$ is the wavelength used, $\theta i$ is the angle between an incident beam (the optical axis 5 of an optical fiber) and a line normal to the surface in which the diffraction grating is formed, and $\theta o$ is the angle between an emergent beam and the normal line.

When the wavelength changes by $\Delta\lambda$ in the condition that $\theta i$ is constant, the change $\Delta x$ of the position of a light beam reaching the light-receiving surface far by a distance L from the diffraction grating is given as follows.

$$\Delta x = (Lm/(d \cdot \cos\theta o)) \cdot \Delta\lambda$$

Hence, when light-receiving units are arranged in the light-receiving surface at positional intervals of a distance calculated on the basis of the equation in accordance with the wavelength distance, separate signals can be obtained in accordance with the wavelengths respectively.

The emergent angle of light from the diffraction grating, however, has low wavelength dependence. Assume now the case where light beams with wavelengths arranged at intervals of 0.8 nm (corresponding to frequency intervals of 100 GHz) are demultiplexed in a 1.55 μm wavelength band available in optical communication. Assuming that the diffraction order m is 25, that the incident angle θi is 71.5° and that the emergent angle θo is 38.5°, then the grating constant d of the diffraction grating is 24.7 μm. The change of the emergent angle obtained in accordance with the wavelength distance of 0.8 nm is only about 0.06° in this system. Hence, a distance L of 48 mm is required so that these light beams can be separated and received by light-receiving devices arranged at intervals of 50 μm.

That is, the positional change Δx of a light spot on the light-receiving surface needs to be normally not smaller than several tens of μm because the light-receiving unit has a fixed size. Since the constants m and d of the diffraction grating cannot be changed largely, the distance L needs to be increased to obtain Δx necessary for a small wavelength change Δλ. Thus, there is a problem that the size of the device cannot but be increased in order to improve the performance of the optical demultiplexer using the diffraction grating.

In addition, since the diffraction angle does not vary depending on the direction of polarization, polarized light beams cannot be separated in accordance with angles by use of a normal diffraction grating. Therefore, when an optical system needs a polarized light separating function, apolarized light separating device may be required separately from the diffraction grating.

To solve the problems, an object of the invention is to provide an optical device having chromatic dispersion characteristic larger than that of any related-art diffraction grating. Another object of the invention is to provide an optical device having a function of separating polarized light in accordance with angles as well as the function of chromatic dispersion.

II. The information processing throughput of a computer has increased greatly with the rapid advance of development of computer technology in recent years. On the other hand, the capacity of communication has increased dramatically with the rapid advance of popularization of the Internet. Under such circumferences, electronics parts having high-speed and large-capacity information processing throughput, high-speed and large-capacity communication devices and high-speed and large-capacity recording devices have been of importance.

As the recording device in these devices, magnetic recording has heretofore prevailed. A recording technique using light, such as a magneto-optical system or an optical phase change system, on the other hand, is taking up an important position. One of important points for development of such an optical recording technique was to shorten the wavelength used so as to increase recording density. This is because the size of a spot allowed to be narrowed by a lens is proportional to the wavelength so that a smaller spot can be formed as the wavelength becomes shorter. The recent development of a blue semiconductor laser has been expected to achieve a very large effect in this respect.

On the other hand, a mainstream technique in the existing optical recording technology is a recording system using a single monochromatic light beam. A writing/reading technique by use of multiple light beams is, however, becoming an important issue in order to perform writing/reading at a high speed. The system using multiple light beams is classified into two groups, that is, a system in which the number of access points is increased while a single wavelength or a narrow range of wavelengths is used, and a system in which recording media each having sensitivity corresponding to the wavelength changed largely to a certain extent are used. In addition, new arrangement having advantages of the two systems may be also conceived.

Some techniques which have been already disclosed will be examined as typical examples of these systems.

A system using a light source divided spatially into parts so that light beams from the light source parts are converged into spatially different spots on a recording medium is regarded as the most popular. For example, a method has been disclosed in Japanese Patent Publication No. 144298/1999. In the disclosed method, semiconductor lasers are arrayed side by side and once coupled to a waveguide by a coupling device system so that light beams emerge from emergence ends disposed at an adequate distance. A lens optical system is arranged to project the emergence ends. Thus, the light beams are converged on spots at a narrow distance on the recording medium.

On the other hand, a method for dividing a light beam into some beams in order to use the light beam parts has been proposed. A technique for structuring an optical head adapted to recording media different in sensitive wavelength has been disclosed in Japanese Patent Application No. 2000-76688. The disclosed technique is not of a genuine multi-beam recording type but suggests that a diffraction grating is disposed on the photo detector side to be adapted to some wavelengths so that a light beam is divided into beams in accordance with the wavelengths to be used. In addition, use of a diffraction optical device for dividing a light beam into beams has been also proposed in Japanese Patent Application No. 306569/1999.

In the system using semiconductor lasers arranged side by side, it was, however, impossible to dispose the semiconductor lasers themselves very close to one another. Accordingly, the system could not help adopting a sophisticated method in which the semiconductor lasers are coupled once to a waveguide. Thus, there was a problem that the optical systembecame too sophisticated to facilitate alignment and assembly. On the other hand, in the system using light beams with different wavelengths, it was necessary to make the optical path of the optical system long enough to separate diffracted light beams sufficiently. Thus, there was a disadvantage that the optical head itself became large.

The invention is developed to solve the foregoing problems. It is an object of the invention to provide a wavelength multiplexing optical recording head which is simple in configuration and which can be small-sized.

SUMMARY OF THE INVENTION

An optical device according to the invention uses two- or three-dimensional photonic crystal having a structure repeating periods in two or three different directions.

(1) According to the invention, in the two-dimensional photonic crystal, the repeatedly periodic structure portion has a first end surface exposed in both of the two different directions and serving as a light incidence surface, and a second end surface exposed in both of the two directions and serving as a light emergence surface.
(2) According to the invention, in the two-dimensional photonic crystal, the repeatedly periodic structure portion has a first end surface exposed in only one of the two different directions and serving as a light incidence surface, and an end surface provided opposite to the light incidence surface and serving as a light emergence surface.
(3) According to the invention, in the three-dimensional photonic crystal, the repeatedly periodic structure portion has a first end surface exposed in two of the three different directions and serving as a light incidence surface, and an end surface provided opposite to the light incidence surface and serving as a light emergence surface.

Preferably, in the optical device as in any one of (1) to (3), at least a part of the light emergence surface is inclined at a predetermined angle relative to the light incidence surface. On this occasion, the optical device may have a so-called prism structure in which both the light incidence surface and the light emergence surface are planar. Alternatively, the optical device may be a diffraction grating in which the light incidence surface or the light emergence surface has a corrugated structure repeating periods.
Further, as in any one of (1) to (3), the repeatedly periodic structure exposed in the light incidence surface may be constituted by two kinds of large and small repeated periods while inclination of the light emergence surface at an angle relative to the light incidence surface is abandoned.
When the optical device as in any one of (1) to (3) is used as a spectroscopic device, preferably, a bonding photonic band corresponding to a wavelength range used in a direction of propagation of light exists in the periodic multilayer structure and the bonding photonic band is not of the lowest order.
On this occasion, particularly preferably, the optical device as in (1) or (3) is used so that the spectroscopic device has not any polarization dependence. Preferably, the repeatedly periodic structure in the light incidence surface or in the light emergence surface has rotational symmetries by 90° around a line normal to the light incidence surface or to the light emergence surface.
Further, in the optical device as in (1) or (3), preferably, only one kind of wave vector of a bonding photonic band corresponding to a wavelength range used in a direction of propagation of light exists and the bonding photonic band is not of the lowest order.
When the optical device according to the invention is used as a polarized light separating device, preferably, the optical device as in (2) is used and a bonding photonic band corresponding to a wavelength range used in a direction of propagation of light is only of the lowest order.
Preferably, the repeatedly periodic structure as in any one of (1) to (3) is composed of three kinds of materials different in refractive index. Further preferably, a medium in contact with the repeatedly periodic structure is air or vacuum.
Incidentally, in each optical device, the light incidence surface and the light emergence surface may be replaced by each other.
According to the invention, a photonic crystal is used as an optical demultiplexing device for use in a wavelength multiplexing optical recording head for writing/reading information in/from an optical recording medium by use of a plurality of wavelengths.
This photonic crystal has a structure repeating periods in two different directions. The repeatedly periodic structure has a first end surface exposed in only one of the two different directions and serving as a light incidence surface, and an end surface provided opposite to the light incidence surface and serving as a light emergence surface. Preferably, at least a part of the light emergence surface is inclined at a predetermined angle relative to the light incidence surface. Further preferably, either the light incidence surface or the light emergence surface forms a diffraction grating having a corrugated structure repeating periods.
The use of the photonic crystal as an optical demultiplexing device permits the configuration of an optical system having a plurality of light sources for emitting light beams with different wavelengths, collimator lenses for converting light beams emitted from the plurality of light sources into parallel light beams respectively, an optically multiplexing device for multiplexing the parallel light beams with different wavelengths into luminous flux, an optical demultiplexing device for demultiplexing the luminous flux with the plurality of wavelengths, and a lens for converging the demultiplexed luminous flux onto an optical recording medium.

It has been already known that very large chromatic dispersion can be obtained by use of such a photonic crystal (so-called super-prism effect). Accordingly, when the photonic crystal is used for forming multiple light beams, the size of a wavelength multiplexing multi-beam recording optical system can be reduced greatly. That is, to generate multiple light beams, light sources obtained by changing the wavelength within a range in which recording sensitivity is not changed are prepared and light beams emitted from the light sources are made to pass through the photonic crystal simultaneously. Thus, light beams can be made to emerge at different angles while a large dispersion angle can be acquired. It is therefore possible to form a small-sized optical system. In addition, when recording is performed by use of the difference between sensitive wavelengths, separation of light from given light sources can be achieved so sharply that a small-sized optical system can be formed.

The present disclosure relates to the subject matter contained in Japanese patent application Nos. 2001-108414 and 2001-108475 (both filed on April 6, 2001), which are expressly incorporated herein by reference in their entireties.

## BRIEF DESCRIPTION OF THE DRAWINGS

Fig. 1 is a typical view showing a structure of an optical device as the base of the invention.
Fig. 2 is an explanatory view showing a periodic multilayer structure (one-dimensional) according to the invention.
Fig. 3 is a view showing an example of a result of photonic band calculation of the periodic multilayer structure (one-dimensional).
Fig. 4 is a view showing another example of the result of photonic band calculation of the periodic multilayer structure (one-dimensional).
Fig. 5 is a graph showing a band chart of the periodic multilayer structure (one-dimensional) in a direction of propagation of light.
Fig. 6 is a graph showing another band chart of the periodic multilayer structure (one-dimensional) in a direction of propagation of light.
Fig. 7 is a typical view showing the dispersion operation of a periodic multilayer structure (one-dimensional, end surface incidence structure) processed into a prism-like shape.
Fig. 8 is a typical view showing the dispersion operation of a periodic multilayer structure (one-dimensional, end surface incidence structure) processed into a blazed shape.
Fig. 9 is a typical view showing the dispersion operation of a periodic multilayer structure (one-dimensional, end surface incidence structure) having two kinds of periods.
Fig. 10 is a typical view showing a two-dimensional end surface incidence structure.
Fig. 11 is a typical view showing an example of the end surface pattern of the two-dimensional end surface incidence structure.
Fig. 12 is a typical view showing a one-dimensional end surface incidence two-dimensional structure.
Fig. 13 is a graph showing an example of a photonic band chart of the one-dimensionalendsurfaceincidencetwo-dimensional structure.
Fig. 14 is a view showing waves in an electric field propagated through the one-dimensional end surface incidence two-dimensional structure.
Fig. 15 is a view showing an example of a result of calculation about the optical characteristic of an optical device having a one-dimensional end surface incidence two-dimensional prism structure.
Fig. 16 is a graph showing another example of a photonic band chart of the one-dimensional end surface incidence two-dimensional structure.
Fig. 17 is a view showing an example of a result of calculation about the optical characteristic of an optical device having a one-dimensional end surface incidence two-dimensional blaze structure.
Fig. 18 is a view showing another example of a result of calculation about the optical characteristic of the optical device having a one-dimensional end surface incidence two-dimensional blaze structure.
Fig. 19 is a view showing an optical system in a related-art spectroscopic apparatus.
Fig. 20 is a view typically showing an overall portion of a wavelength multiplexing optical recording head according to the invention.
Fig. 21 is a conceptual view showing a main portion of the wavelength multiplexing optical recording head according to the invention.

## DESCRIPTION OF THE PREFERRED EMBODIMENT

Embodiments of the invention will be described below specifically.

A periodic multilayer film composed of thin films each having a thickness equal to or smaller than the wavelength of a light beam has a photonic band gap as one-dimensional photonic crystal.

For this reason, the periodic multilayer film has been already put into practical and wide use as an optical device such as a high-reflectance film, a polarized light separating filter or a wavelength selective filter.

In the invention, a two-or three-dimensional photonic crystal structure having a repeatedly periodic structure in two or three directions is used to provide performance that is difficult to be achieved by any one-dimensional photonic crystal.

First, description will be made on an optical device using one-dimensional photonic crystal as the base of the invention.

Fig. 1 is a view typically showing a "one-dimensional end surface incidence structure" as the base of the invention. A multilayer structure 1 having periods in a direction (Y direction) parallel to a surface of a substrate is formed on a surface of a planar substrate 2. A repeatedly corrugated (blaze) structure 5 shaped like the teeth of a saw and having a function of a diffraction grating is formed on a surface of the multilayer structure 1. Incident light beams 3 perpendicular to the substrate surface are fed from the substrate side, so that emergent light beams 4 subjected to refraction or diffraction are extracted from the multilayer structure 1. With the structure shown in Fig. 1, it is possible to obtain chromatic dispersion much larger than that in a blaze diffraction grating provided on a homogenous material such as glass.

The principle of the phenomenon will be described briefly.

Fig. 2 is a typical view of a multilayer structure extending infinitely. The multilayer structure is a structure in which materials A (refractive index: $n_A$) each having a thickness $t_A$ and materials B (refractive index: $n_B$) each having a thickness $t_B$ are stacked alternately with a = ($t_A + t_B$) as a period. Such a multilayer structure can be regarded as one-dimensional photonic crystal, so that a photonic band chart can be obtained by calculation based on a theory of photonic crystal. The method of calculation has been described in detail in Photonic Crystals, Princeton University Press, 1995, Physical Review B Vol. 44, No. 16, p.8565, 1991, or the like.

The range of the band chart of the periodic multilayer film is limited in the Y direction (periodic direction)in Fig. 2 but the range extends infinitely in the X and Z directions (in which a plane extends). Figs. 3 and 4 show results of band calculation by a plane wave method, upon respective first, second and third lowest bands of TE-polarized light beams and of TH-polarized light beams in a multilayer film constituted by an alternate laminate of the following two kinds of layers with a period of a.

Layers with a refractive index of 1.44 (thickness: 0.5a), and layers with a refractive index of 2.18 (thickness: 0.5a).

Here, the TH-polarized light beams mean polarized light beams with a magnetic field in the X direction whereas the TE-polarized light beams mean polarized light beams with an electric field in the X direction. Incidentally, the numerical character given to each of curves in Figs. 3 and 4 expresses the normalized frequency:

$$\omega a/2\pi c$$

in which $\omega$ is the angular frequency of an incident light beam, a is the period of the structure, and c is the light velocity in a vacuum. Since the normalized frequency can be also expressed by $a/\lambda_0$ using the wavelength $\lambda_0$ of the incident light beam in a vacuum, the normalized frequency will be described below as $a/\lambda_0$. Figs. 3 and 4 show Brillouin zones each representing one period in a reciprocal space. The vertical axis represents the Y direction in which the upper and lower boundaries express the range of $\pm\pi/a$ with respect to the center. The horizontal axis represents the Z direction (or the X direction) which has no boundary because the Z direction does not have any periodicity. The left and right ends in each of the charts shown in Figs. 3 and 4 are provided to show the range of calculation for convenience's sake. In each Brillouin zone, a position means a wave vector in the multilayer structure, and a curve means a band corresponding to the wavelength $\lambda_0$ (in a vacuum) of an incident light beam.

Here, light beams propagated through the photonic crystal will be considered in the case where the X-Y plane in the structure of Fig. 2 is used as a section and plane waves (TE-polarized light beams or TH-polarized light beams) are made incident perpendicularly on this section in the Z direction.

The changes of $a/\lambda_0$ values from the origin in the Z direction in the band charts shown in Figs. 3 and 4 are shown in Fig. 5 (TE-polarized light beam) and Fig. 6 (TH-polarized light beam) . As shown in Fig. 5, when the wavelength of an incident light beam in a vacuum is $\lambda_A$, a wave vector $k_{A1}$ corresponding to the first band exists in the photonic crystal. In other words, the incident light beam is propagated through the photonic crystal as a wave with a period $\lambda_{A1} = 2\pi/k_{A1}$ (hereinafter referred to as "first band beam") in the Z direction.

On the other hand, when the wavelength of an incident beam in a vacuum is $\lambda_B$, there are wave vectors $k_{B1}$ and $k_{B3}$ corresponding to the first and third bands. Here, the second band is left out of consideration because it is "anti-bonding". Therefore, the first band beam with a period $\lambda_{B1} = 2\pi/k_{B1}$ and a wave with a period $\lambda_{B3} = 2\pi/k_{B3}$ (hereinafter

referred to as "third band beam") are propagated in the Z direction through the photonic crystal respectively.

Here, a numerical value obtained by dividing a period ($\lambda_A$, $\lambda_B$, or the like) in a vacuum by a corresponding period ($\lambda_{A1}$, $\lambda_{B3}$, or the like) in the photonic crystal is defined as "effective refractive index". As is understood from Fig. 5, since $a/\lambda_0$ and k are substantially proportional to each other in the first band beam, the effective refractive index of the first band beam also little changes in accordance with $\lambda_1$. The effective refractive index of the third band beam, however, changes drastically in accordance with $\lambda_0$.

Accordingly, when the multilayer structure 1, that is, the photonic crystal is processed into a prism-like shape so that the incidence surface and the emergence surface are not parallel to each other but form a specific angle of inclination as shown in Fig. 7, and parallel light rays with a plurality of wavelengths are made incident as incident beams 3 onto an incidence surface 1b which is not parallel to layer surfaces of the multilayer structure (the substrate is not illustrated), the first band beam emerging from the emergence surface 1a inclined to the incidence surface 1b exhibits chromatic dispersion only substantially equal to that of a normal homogenous medium. On the contrary, the third band beam exhibits very large dispersion. Thus, the photonic crystal can be used as a dispersion device. This is one kind of so-called super-prism effect. The super-prism effect has been proposed in the following document and so on.

Physical Review B, Vol. 58, No. 16, p.R10096, 1998

According to the prism-like shape in Fig. 7, it is necessary to increase the thickness of the photonic crystal structure in the Z direction. This is a problem in production. When the emergence surface 1c is formed as a blaze structure 5 as shown in Fig. 8, the thickness can be reduced greatly. The diffraction of the blaze structure is known well. If the period and depth of blazes are designed optimally, the efficiency of a diffracted light beam of a specific order can be made close to 100%. Dispersion caused by the super-prism effect is, however, very large, so that the blaze structure may be shaped correspondingly to the zero-order diffracted beam. Incidentally, the first band beam also exists in this case but it is not illustrated (the same thing will apply hereunder).

In addition, since the multilayer structure in Fig. 2 has a large structural difference between the X direction and the Y direction, a characteristic difference appears in accordance with the direction of polarization. Accordingly, when the band chart of the TE-polarized beams and the band chart of the TH-polarized beams are compared with each other (Figs. 5 and 6), there is a difference in each band and there is a large difference particularly in the first band between these two band charts. Therefore, the first band can be made good use of for separating polarized light. For example, incident beams of TE and TH corresponding to $a/\lambda_A$ in Figs. 5 and 6 become emergent beams largely different in angle. In this case, since there is no third band beam, the efficiency in utilization of the incident beams can be enhanced. Incidentally, since the second band and the third band in Fig. 6 cross each other (in terms of accidental degeneracy), these bands do not coincide with the second and third results in Fig. 4.

Each period in the Y direction may be formed as a double structure of a small period and a large period in place of the blaze structure in Fig. 8. Fig. 9 shows an example in which a small period $P_S$ is a repeated period in which two kinds of materials A and B are stacked. In the range of one large period $P_L$, the film thickness of the material A increases in the Y direction at a specific ratio while the film thickness of the material B decreases at the same ratio. Thus, the average refractive index is inclined in the Y direction, so that the wave period in the photonic crystal changes continuously to produce an inclination in the wave front. This wave period is repeated with the large period $P_L$ so that the wave front in the light emergence-side surface is also shaped like the teeth of a saw. As a result, an optical effect equivalent to that of the blazed and corrugated shape is obtained.

[First Embodiment]

In the one-dimensional end surface incidence structure, there appears a difference between a TE-polarized beam and a TH-polarized beam because the incidence surface has a large structural difference between the X direction and the Y direction. Therefore, if the structure on the X-Y plane is provided to have rotational symmetries by 90° around the Z axis which is a direction of incidence of the beam, the difference caused by the direction of polarization can be eliminated. Such symmetries can be achieved, for example, by the following structure.

Fig. 10 is a typical view of photonic crystal composed of four kinds of materials A, B, C and D with refractive indices of $n_1$, $n_2$, $n_3$ and $n_4$ respectively. Each of the materials is shaped like a quadratic cylinder having a bottom surface on the X-Y plane. Each of the materials C is shaped like a quadratic cylinder having a square bottom surface. Each of the materials has no structure in the Z direction. As shown in the enlarged view of a part of an end surface, in the X direction, the materials D are arranged on the opposite sides of the materials C each shaped like a square in X-Y section. On the other hand, in Y direction, the materials A are arranged on the opposite sides of the materials C. In such arrangement, the materials D and A border on the materials C respectively. The materials B and C are positioned so as not to border on each other. It is a matter of course that a period ax in the X direction is equal to a period ay in the Y direction. On this occasion, rotational symmetries by 90° around the Z axis can be achieved if $n_1 = n_4$. Thus, it

will go well if the materials A and D are made the same material. This 90° rotational symmetry pattern is merely an example, and the pattern is not limited to this example. Fig. 11 shows a general example of the 90° rotational symmetry pattern.

A structure similar to the "one-dimensional end surface incidence structure" in Fig. 7 is adopted as a spectroscopic device, and parallel beams are made incident in the Z direction on an end surface parallel to the X-Y plane. Refracted beams can be obtained with the back surface side as an emergence surface . When the structure is processed into a prism-like shape in the same manner as that in the case of the one-dimensional structure so that the incidence end surface and the emergence end surface are not parallel to each other, a large chromatic dispersion effect can be obtained. This structure may be processed into a blazed shape as shown in Fig. 8. The spectroscopic device having such a structure has no polarization dependence, so that the device is suitable for demultiplexing a beam propagated through an optical fiber and mixed with a polarized beam, regardless of polarization.

[Second Embodiment]

The one-dimensional end surface incidence structure has an advantage that the structure can be produced easily because the structure is a relatively simple multilayer structure. As is apparent from Figs. 5 and 6, first band beams also exist under the conditions where third band beams exist. Accordingly, when the third band beams having large dispersion are used for a spectroscopic device, there arises a problem that the ratio of the third band beams to incident beams, that is, the efficiency in utilization of light intensity becomes low. To solve this problem, it is conceived that periodicity is introduced into the Z direction to increase the ratio of the third band beams.

Fig. 12 shows an example of a two-dimensional photonic crystal structure having a periodic structure in the Y direction and in the Z direction. This structure is equivalent to a structure obtained by rotating the structure in Fig. 10 by 90° around the Y axis. It is, however, unnecessary to shape each period unit of each material in Y-Z section like a square, and it is unnecessary to make the period ay in the Y direction equal to the period az in the Z direction. For example, in the structure of Fig. 12, beams propagated through the photonic crystal when plane waves (TE-polarized beams) are made incident perpendicularly in the Z direction on an end surface parallel to the X-Y plane, that is, in the "one-dimensional end surface incidence two-dimensional structure" will be considered upon the following assumption.

$n_1$=1.44
$n_2$=2.18
$n_3$=1.00
$n_4$=1.00
ay=1
az=0.5
ty=0.5
tz=0.5

Fig. 13 shows bands from the origin of the Brillouin zone in the Z direction by a partial enlarged zone scheme. As shown in Fig. 13, when the wavelength of an incident beam in a vacuum is $\lambda_A$, only a wave vector $k_{A3}$ corresponding to the bonding third band exists in the photonic crystal. Although two kinds of wave vectors caused by the third band exist in the case of the one-dimensional structure, only one kind of wave vector exists in the case shown in Fig. 13 because there is a large band gap in the vicinity of k = 1.0. Incidentally, the second band is anti-bonding.

Fig. 14 shows results of numerical values obtained by calculation of wave propagation (TH-polarized beams) in a finite element method upon the photonic crystal under the same condition as in Fig. 13. Fig. 14 shows the intensity of an electric field in the Z direction in the case of $ay/\lambda_0$ = 0.70, upon the following positions:

(1): the center of the layer of n = 2.18;
(3): the boundary between the layer of n = 2.18 and the layer of n = 1.44;
(5): the center of the layer of n = 1.44;
(2): halfway between (1) and (3); and
(4): halfway between (3) and (5).

Although the respective layers are different in amplitude and some degree of noise is observed, it is proved that a third band beam with a single period is propagated. It can be therefore said that an incident beam can be converted into a single third band beam efficiently by the structure shown in Fig. 12.

This structure can be used as a spectroscopic device or the like in the same manner as the "one-dimensional end surface incidence structure". The structure becomes more sophisticated than the one-dimensional structure but can utilize incident beams with higher efficiency.

[Example 1 of Calculation]

Simulation using a finite element method was carried out on the two-dimensional structure typically shown in Fig. 13. The set conditions were just as described above. The period in the Y direction was specifically set to be ay = 443.1 nm.

Plane waves (TE-polarized beams) with wavelength $\lambda_0$ were made incident onto the X-Y plane as an incidence surface from a vacuum, and electromagnetic waves in the Y-Z plane were calculated by the finite element method.

The width of the incident plane waves was set to 10 ay, the thickness of the structure in the Z direction was set at about 7,000 nm and the end surface was set to have an angle of 30°, followed by a vacuum. The band chart of the TE-polarized beams in the direction of propagation (Z direction) is like Fig. 14. Table 1 shows the magnitude of the wave vector of the third band, the effective refractive index, and the direction angle of refracted beams in the case of $\lambda_0$ = 633 nm. The direction angle of refracted beams was calculated on the basis of the effective refractive index and the law of refraction.

[Table 1]

| $\lambda_0$ = 633 nm, ay/$\lambda_1$ = 0.700 | |
|---|---|
| propagated beam (TE-polarized beam) in Z direction | third band |
| magnitude of wave vector | $k_3$=0.243.2π/a |
| effective refractive index $\lambda_0$.k/2π | 0.347 |
| direction angle of refracted beam | $\theta_3$=10.3° |

Fig. 15 shows a result of the simulation. From Fig. 15, the following result was obtained.
third band beam: direction angle θ = about 10°

This value was near to the result of band calculation shown in Table 1. The third band refracted beams accounted for most of the emergent beams from the oblique surface. Scattered rays propagated in the Y direction through the structure were, however, also radiated intensively. This is because the refractive index difference in the Z direction is larger than that in the Y direction so that the light confinement effect is intensive.

Table 2 shows a result of the calculation in the case of $\lambda_0$ = 575.5 nm.

[Table 2]

| $\lambda_0$ = 575.5 nm, ay/$\lambda_0$ = 0.770 | |
|---|---|
| propagated beam (TE-polarized beam) in Z direction | third band |
| magnitude of wave vector | $k_3$=0.551.2π/a |
| effective refractive index $\lambda_0$.k/2π | 0.716 |
| direction angle of refracted beam | $\theta_3$=9.0° |

When the case of $\lambda_0$ = 633 nm and the case of $\lambda_0$ = 575.5 nm are compared with each other in their values of band calculation, it is proved that the difference in incident wavelength appears as dispersion of the refraction angle of the third band beams. Although the wavelength difference Δλ between 633 nm and 575.5 nm is 9.1% (on the basis of 633 nm), the difference between direction angles of third band beams reaches 11.0°. Accordingly, the direction angle difference Δθ per Δλ = 1 % is about 1.2°. Thus, dispersion larger than that in a normal prism or diffraction grating can be obtained. Further, since the third band refracted beams more intensive than those in the case of the one-dimensional structure can be obtained, this two-dimensional structure can be used as a higher efficient spectroscopic device.

[Example 2 of Calculation]

Simulation using a finite element method was carried out upon the two-dimensional structure which was typically shown in Fig. 12 and which was subjected to blazing treatment as shown in Fig. 8.

$n_1$=1.00
$n_2$=1.00
$n_3$=2.18
$n_4$=1.44
ay=810.2 nm
az=ay/4
ty=0.5

tz=0.5

Plane waves (TE-polarized beams) of wavelength $\lambda_0$ = 633 nm were made incident on the X-Y plane as an incidence surface from a vacuum, and electromagnetic waves in the Y-Z plane were calculated. The thickness of the structure in the Z direction was set at about 5,000 nm, and the structure was formed as a blaze structure in which the blaze angle $\phi$ was set at 30° and the period in the Y direction was 1,536 nm (three times as large as ay). The structure was followed by a vacuum. The band chart of the TE-polarized beams in the direction of propagation (Z direction) is shown in Fig. 16.

Table 3 shows the magnitude of the wave vector of the third band, the effective refractive index, and the direction angle of refracted beams (zero-order diffracted beams) in the case of $\lambda_0$ = 633nm. The direction angle of refracted beams was calculated on the basis of the effective refractive index and the law of refraction.

[Table 3]

| $\lambda_0$ = 633 nm, ay/$\lambda_0$ = 1.28 | |
|---|---|
| propagated beam (TE-polarized beam) in Z direction | third band |
| magnitude of wave vector | $k_3$=1.28.2π/ay |
| effective refractive index $\lambda_0$.k/2π | 1.00 |
| direction angle of refracted beam | $\theta_3$=0° |

Fig. 17 shows a result of the simulation. From Fig. 17, the following result was obtained.
third band beam: direction angle $\theta$ = about 0°

This value was close to the result of band calculation shown in Table 3. The "diffracted beams" 8 generated in Fig. 17 are diffracted beams of orders which are other than zero-order and which are generated by the periods or blaze periods of the photonic crystal structure exposed in the end surfaces.

As an example in which the wavelength of the incident beams 4 is changed, a result of calculation in the case of $\lambda_0$ = 450 nm and a result of the simulation are shown in Table 4 and Fig. 18 respectively.

[Table 4]

| $\lambda_0$ = 450 nm, ay/$\lambda_0$ = 1.138 | |
|---|---|
| propagated beam (TE-polarized beam) in Z direction | third band |
| magnitude of wave vector | $k_3$=1.02.2π/a |
| effective refractive index $\lambda_0$.k/2π | 0.896 |
| direction angle of refracted beam | $\theta_3$=3.4° |

From Fig. 18, the direction angle $\theta$ of emergent beams (refracted beams) 6 is about 3°, which is in excellent agreement with the band calculation value.

[Third Embodiment]

When the structure on the X-Y plane in the "one-dimensional end surface incidence two-dimensional structure" according to the second embodiment is provided with rotational symmetries by 90° in the same manner as in the first embodiment, the third band beams can be intensified while the difference caused by the direction of polarization can be eliminated. This is equivalent of introduction of a repeatedly periodic structure in the three directions of X, Y and Z and also equivalent to use of three-dimensional photonic crystal. A "two-dimensional end surface incidence three-dimensional structure" is formed as an optical device.

The materials of the photonic crystal used in the invention are not particularly limited if they can secure transparency in an operating wavelength range. Examples of the materials used preferably include silica, silicon, titanium oxide, tantalum oxide, niobium oxide, and magnesium fluoride because they are generally used as materials of multilayer films and excellent in durability and low in film formation cost. It is, however, preferable that the refractive index difference is kept not smaller than 0.1 because the operation of modulation becomes too weak to fulfill an expected operation when the refractive index difference between the materials is small. When the materials are selected suitably, the operation of the invention can be fulfilled in a normally used wavelength range of from about 200 nm to about 20 μm.

For example, the structure illustrated in the second embodiment can be produced as follows. Thin films of silica and thin films of titanium oxide are stacked alternately on a glass substrate by use of a method such as a vacuum vapor deposition method, a sputtering method, an ion-assisted vapor deposition method or a CVD method. Then, stripe-like grooves are formed perpendicularly in the film surface by a method of reactive ion etching or the like. Thus, the structure described in the second embodiment can be formed.

Various methods other than the method described above have been proposed for producing three-dimensional photonic crystal.

According to the invention, polarization dependence can be controlled by an optical device in which beams are incident on a specific end surface of two- or three-dimensional photonic crystal. Thus, a spectroscopic function or a polarized light separating function without any polarization dependence can be achieved with high efficiency.

[Optical Recording Head]

Next, an optical recording head using the photonic crystal according to the present invention will be discussed hereafter.

As shown, for example, in Fig. 1, a structure of photonic crystal 1 having periods in the Y direction and in the Z direction is formed on a parallel plane substrate 2. An incident beam 4 including a plurality of wavelength components enters the photonic crystal 1 from the substrate 2 side. An emergence-side end surface of the photonic crystal 1 is formed as a blazed diffraction grating 3. The beam propagated through the photonic crystal 1 is very large in chromatic dispersion in comparison with a normal homogenous material. Thus, the dispersion of an emergent beam (refracted beam) 6 modified by this structure becomes much larger than that modified by a normal diffraction grating.

For example, in an example of design which will be described later, a difference $\Delta\theta$ of about 0.24° is obtained between direction angles in the vicinity of a wavelength difference $\Delta\lambda$ of 1% by a photonic crystal device. In comparison between this numerical value and a numerical value obtained by another chromatic dispersion device, the dispersion angle (about 0.24°) of the photonic crystal is much larger than the dispersion angle (about 0.08°) of an often used glass prism which is made of heavy flint glass and which has a vertical angle of 11°.

On the other hand, in comparison with a normal transmissive diffraction grating, when a beam is made perpendicularly incident onto a grating plane with a grating constant of $5\lambda$ with respective to the wavelength $\lambda$ used, the angle difference of the primary diffracted beam changes by about 0.11° as the wavelength $\lambda$ changes by 1%. Accordingly, the dispersion angle of the diffraction grating is indeed larger than that of the prism but is smaller than that of the photonic crystal. It is therefore apparent that the use of the photonic crystal can realize reduction in the size of such an optical system.

Incidentally, when the grating constant of the transmissive diffraction grating is made smaller than $5\lambda$, diffracting efficiency is lowered suddenly. Thus, it is not appropriate to use the transmissive diffraction grating for the purpose of reducing the size of an optical system (see <u>Introduction of Diffraction Optical Devices</u> by Optronics Co., Ltd., 1997).

The diffraction grating may be disposed in a light incidence surface. In addition, when a sufficient thickness can be secured between the light incidence surface and the light emergence surface in the photonic crystal, the photonic crystal need not be shaped like a blazed diffraction grating but may be formed into a structure in which the incidence surface and the exist surface are not parallel with but inclined to each other so that the photonic crystal functions as a spectroscopic prism. Also in this case, the same effect can be obtained.

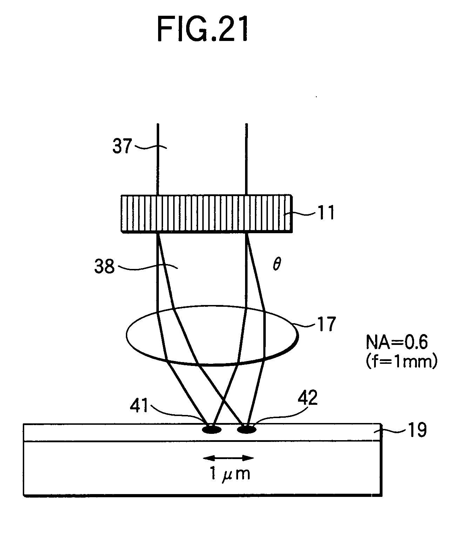

A wavelength multiplexing optical recording head according to the invention will be described on the basis of the fundamental examination described above. To attain higher-density recording, a wavelength multiplexing recording optical system is produced so that the center of wavelengths is 400 nm. Fig. 20 shows an overall portion of the head, and Fig. 21 shows a main portion of the head. Light beams 31 and 32 emitted from semiconductor lasers 10 and 20 which are light sources with different wavelengths are converted into parallel light beams 34 and 35 by collimator lenses 13 and 23 respectively. Then, the parallel light beams 34 and 35 are made incident onto a beam splitter 15 which is an optical multiplexing device. A light beam 37 multiplexed by the beam splitter 15 is made incident onto a photonic crystal device 11 which is an optical demultiplexing device having a structure similar to that shown in Fig. 1. Hence, as shown in Fig. 21, demultiplexed beams 38 emerge at different angles in accordance with the wavelengths. The demultiplexed beams 38 are converged into different positions 41 and 42 respectively on a recording medium 19 by a lens 17.

Although Fig. 20 shows the case where only two semiconductor lasers 10 and 20 with two wavelengths are provided as the light sources, the invention may be applied also to the case where a larger number of light sources are used in order to increase the degree of wavelength multiplexing. An optical system for multiplexing light beams with a plurality of wavelengths is not limited to this example. The photonic crystal has a structure in which the directional relation between an incident light beam and an emergent light beam (demultiplexed beam) changes. When the photonic crystal is applied to an optical recording head, it is desired that the angle between the incident light beam and the emergent light beam is as small as possible as shown in Fig. 20 or 21. Such an optical system, however, can be formed even in the case where the emergent light beam has an angle close to 90° relative to the incident light beam and emerges from a side surface of the photonic crystal.

When, for example, blue semiconductor lasers each with an emission wavelength of about 400 nm are used as the light sources and a lens with NA = 0.6 (focal length $\underline{f}$ = 1 mm) is used as the objective lens 17, each focal spot has a diameter of from about 0.3 to 0.4 μm. To secure an interval of 1 μm for separating the spots, it is necessary to achieve a diffraction angle difference of 0.057°. When light sources with wavelengths different by 1 nm are used, it is necessary for the spectroscopic device to achieve a refraction angle of at least 0.228° per wavelength difference of 1 % (4 nm). Since the chromatic dispersion characteristic of the photonic crystal examined previously exhibits a refraction angle of about 0.24° per wave length difference of 1%, the characteristic can be fulfilled.

In use of a diffraction grating or a glass prism, the focal length of the lens must be selected to be large otherwise separating power deteriorates. In this case, it is impossible to construct a small-sized wavelength multiplexing optical system.

The materials of the photonic crystal used in the invention are not particularly limited if the photonic crystal can be kept transparent in an operating wavelength range. Preferred examples of the materials include silica, silicon, titanium oxide, tantalum oxide, niobium oxide and magnesium fluoride because they can be generally used as materials for multilayer films and are excellent in durability and low in film formation cost. It is, however, preferable that the refractive index difference between materials is kept not smaller than 0.1 because the modulating operation is weakened so that an expected operation may be unable to be fulfilled when the difference is too small. When the materials are selected suitably, the operation of the invention can be fulfilled in a normally used wavelength range of from about 200 nm to about 20 μm.

A vacuum vapor deposition method, a sputtering method, an ion-assisted vapor deposition method, or a CVD method may be used as a method for forming such a multilayer film.

Further, even in the case where each of layers constituting the photonic crystal has a gradient index distribution in which the refractive index varies continuously, the photonic crystal can have substantially the same characteristic as described above if a difference can be formed between refractive indices.

[Design Example]

A specific design example will be described below. A subject of this design example is two-dimensional photonic crystal having a structure as shown in Fig. 12. As shown in Fig. 12, the photonic crystal is composed of four different kinds of materials A (refractive index: $n_1$), materials B (refractive index: $n_2$), materials C (refractive index: $n_3$) and materials D (refractive index: $n_4$). The photonic crystal has a structure in which quadratic cylinders each having a rectangular bottom surface on a Y-Z plane are stacked periodically at intervals of predetermined periods ay and az in Y and Z directions respectively. The respective refractive indices in the design example are set as follows.

$n_1=1.0$
$n_2=1.0$
$n_3=2.18$
$n_4=1.44$

In this example, the materials A and B are the same and each of the materials A and B is provided as an air (or vacuum) layer.

The periods of the respective layers are set as follows.

ay=512 nm
az=ay/4
ty=0.5
tz=0.5

The optical device as a subject of the design example is equivalent to the structure shown in Fig. 1 in the case where the incidence end surface is set on the X-Y plane and plane waves (TE polarized light beams) are made incident perpendicularly in the Z direction so that emergent light beams are extracted from the opposite end surface parallel to the X-Y plane. Figs. 17 and 18 show results of calculation in which propagation of wave with a wavelength (wavelength in a vacuum) $\lambda_0$ through the optical device is expressed in numerical values by a finite element method. The thickness of the structure in the Z direction is set at about 5,000 nm. Although not shown explicitly in Fig. 12, a blazed structure is formed in the emergence surface of the photonic crystal. In the structure, the blaze angle $\phi$ is set at 30° and the period in Y direction is set at 1,536 nm (three times as long as the period ay). The medium around the optical device is air (or vacuum).

(1) In the case of $\lambda_0$ = 400 nm (Fig. 17),
the incident light beam 4 forms a refracted light beam (emergent light beam) 6 with a direction angle $\theta$ of about 0°.

(2) In the case of $\lambda_0$ = 450 nm (Fig. 18),
the incident light beam 4 forms a refracted light beam (emergent light beam) 6 with a direction angle $\theta$ of about 3°.

While the wavelength difference $\Delta\lambda$ between 400 nm and 450 nm is 12.5% (on the basis of 400 nm), the direction angle difference reaches 3°. Accordingly, the direction angle difference $\Delta\theta$ per $\Delta\lambda$ = 1 % is about 0.24°. Incidentally, the "diffracted light beams" 8 generated in Figs. 17 and 18 are diffracted light beams generated on the basis of the period or blaze period of the photonic crystal structure exposed on the end surface.

As described above, in accordance with the invention, light beams leaking from the photonic crystal which is a periodic multilayer structure have good directivity while the directions of the beams largely depend on wave lengths. By use of the wavelength dependence, a wavelength multiplexing optical recording head can be achieved without causing any increase in size thereof. Since multilayer films for forming such photonic crystal can be mass-produced relatively inexpensively by use of existing techniques, it is possible to reduce the cost of such optical devices. In addition, similar devices can be also produced by use of microprocessing techniques.

**Claims**

**1.** An optical device comprising a two-dimensional photonic crystal structure having a structure portion repeating periods in two different directions, wherein: said repeatedly periodic structure portion has a first end surface exposed in both of said two different directions and serving as a light incidence surface, and a second end surface exposed in both of said two different directions and serving as a light emergence surface; and at least a part of said light emergence surface is inclined at a predetermined angle relative to said light incidence surface.

**2.** An optical device comprising a two-dimensional photonic crystal structure having a structure portion repeating periods in two different directions, wherein: said repeatedly periodic structure portion has a first end surface exposed in only one of said two different directions and serving as a light incidence surface, and an end surface provided opposite to said light incidence surface and serving as a light emergence surface; and at least a part of said light emergence surface is inclined at a predetermined angle relative to said light incidence surface.

**3.** An optical device comprising a three-dimensional photonic crystal structure having a structure portion repeating periods in three different directions, wherein: said repeatedly periodic structure portion has a first end surface exposed in to of said three different directions and serving as a light incidence surface, and an end surface provided opposite to said light incidence surface and serving as a light emergence surface; and at least a part of said light emergence surface is inclined at a predetermined angle relative to said light incidence surface.

**4.** An optical device according to any one of claims 1 through 3, wherein both said light incidence surface and said light emergence surface are planar.

**5.** An optical device according to any one of claims 1 through 3, wherein one of said light incidence surface and said light emergence surface has a corrugated structure repeating periods.

**6.** An optical device comprising a two-dimensional photonic crystal structure having a structure portion repeating periods in two different directions, wherein: said repeatedly periodic structure portion has a first end surface exposed in both of said two different directions and serving as a light incidence surface, and a second end surface exposed in both of said two different directions and serving as a light emergence surface; and at least one of said two different directions of said repeatedly periodic structure is constituted by two kinds of large and small repeated periods.

**7.** An optical device comprising a two-dimensional photonic crystal structure having a structure portion repeating periods in two different directions, wherein: said repeatedly periodic structure portion has a first end surface exposed in only one of said two different directions and serving as a light incidence surface, and an end surface provided opposite to said light incidence surface and serving as a light emergence surface; and said repeatedly periodic structure exposed in said light incidence surface is constituted by two kinds of large and small repeated periods.

**8.** An optical device comprising a three-dimensional photonic crystal structure having a structure portion repeating periods in three different directions, wherein: said repeatedly periodic structure portion has a first end surface exposed in two of said three different directions and serving as a light incidence surface, and a second end surface exposed in two of said three different directions and serving as a light emergence surface; and at least one of said two directions of said repeatedly periodic structure exposed in said light incidence surface is constituted by two kinds of large and small repeated periods.

**9.** An optical device according to any one of claims 1 through 3, wherein said repeatedly periodic structure in said light incidence surface has rotational symmetries by 90° around a line normal to said light incidence surface.

**10.** An optical device according to any one of claims 1 through 3 or any one of claims 6 through 8, wherein: a wave vector of a bonding photonic band corresponding to a wavelength range used in a direction of propagation of light exists in said periodic multilayer structure; and said bonding photonic band is not of the lowest order.

**11.** An optical device according to claim 10, wherein: only one kind of wave vector of a bonding photonic band corresponding to a wavelength range used in a direction of propagation of light exists in said optical device; and said bonding photonic band is not of the lowest order.

**12.** An optical device according to claim 2 or 7, wherein a bonding photonic band corresponding to a wavelength range used in a direction of propagation of light is of only the lowest order.

**13.** An optical device according to any one of claims 1 through 3 or any one of Claims 6 through 8, wherein said repeatedly periodic structure is composed of three kinds of materials different in refractive index.

**14.** An optical device according to any one of claims 1 through 3 or any one of claims 6 through 8, wherein a medium in contact with said repeatedly periodic structure is air or vacuum.

**15.** An optical device according to any one of claims 1 through 14, wherein said light incidence surface and said light emergence surface are replaced by each other.

**16.** A wavelength multiplexing optical recording head using an optical device according to any one of claims 1 to 15.

**17.** A wavelength multiplexing optical recording head for writing/reading information in/from an optical recording medium by use of a plurality of wavelengths, wherein photonic crystal is used as an optical demultiplexing device.

**18.** A wavelength multiplexing optical recording head according to claim 1, wherein: saidphotonic crystal has a structure repeating periods in two different directions; said repeatedly periodic structure has a first end surface exposed in only one of said two different directions and serving as a light incidence surface, and an end surface provided opposite to said light incidence surface and serving as a light emergence surface; and at least a part of said light emergence surface is inclined at a predetermined angle relative to said light incidence surface.

**19.** A wavelength multiplexing optical recording head according to claim 18, wherein said light incidence surface or said light emergence surface has a corrugated structure repeating periods.

**20.** A wavelength multiplexing optical recording head according to any one of claims 17 through 19, further comprising an optical system which includes a plurality of light sources for emitting light beams with different wavelengths, collimator lenses for converting light beams emitted from said plurality of light sources into parallel light beams respectively, an optically multiplexing device for multiplexing said parallel light beams different in wavelength into luminous flux, an optically demultiplexing device for demultiplexing said luminous flux with said plurality of wavelengths, and a lens for converging said demultiplexed luminous flux onto an optical recording medium.

FIG.1

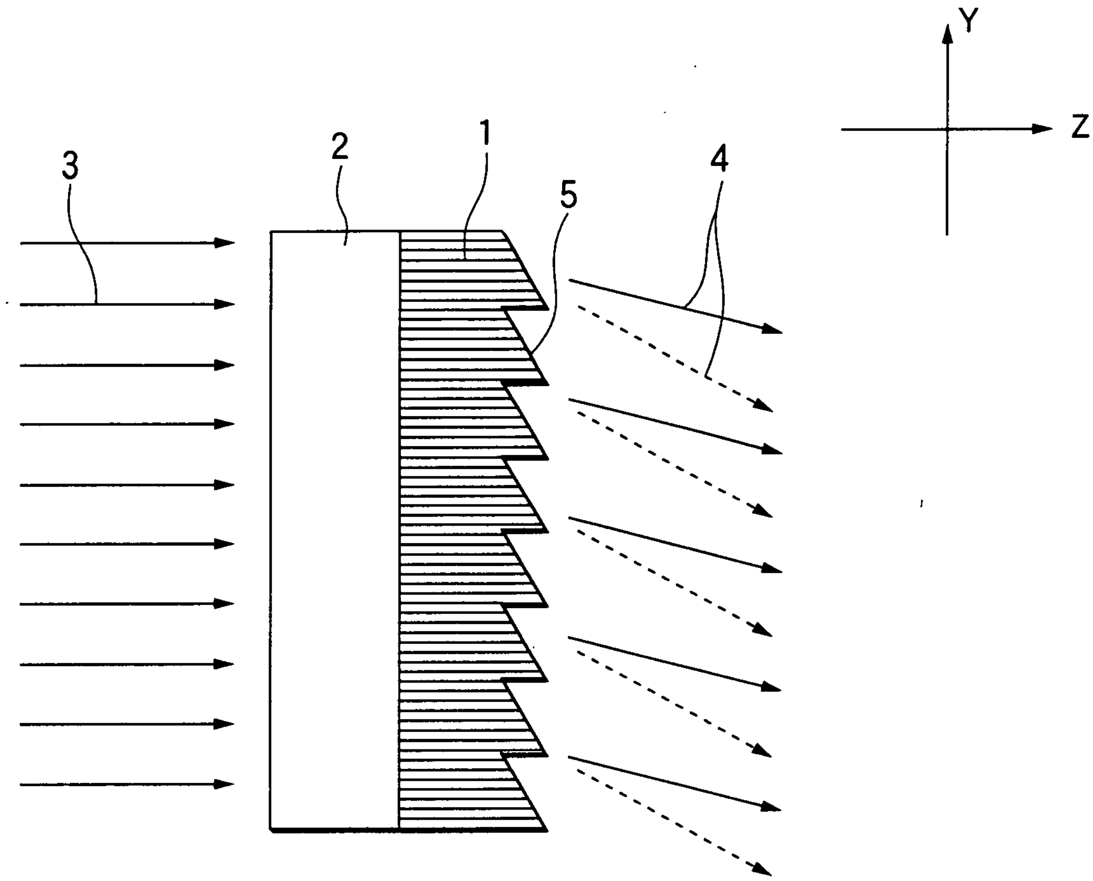

FIG.2

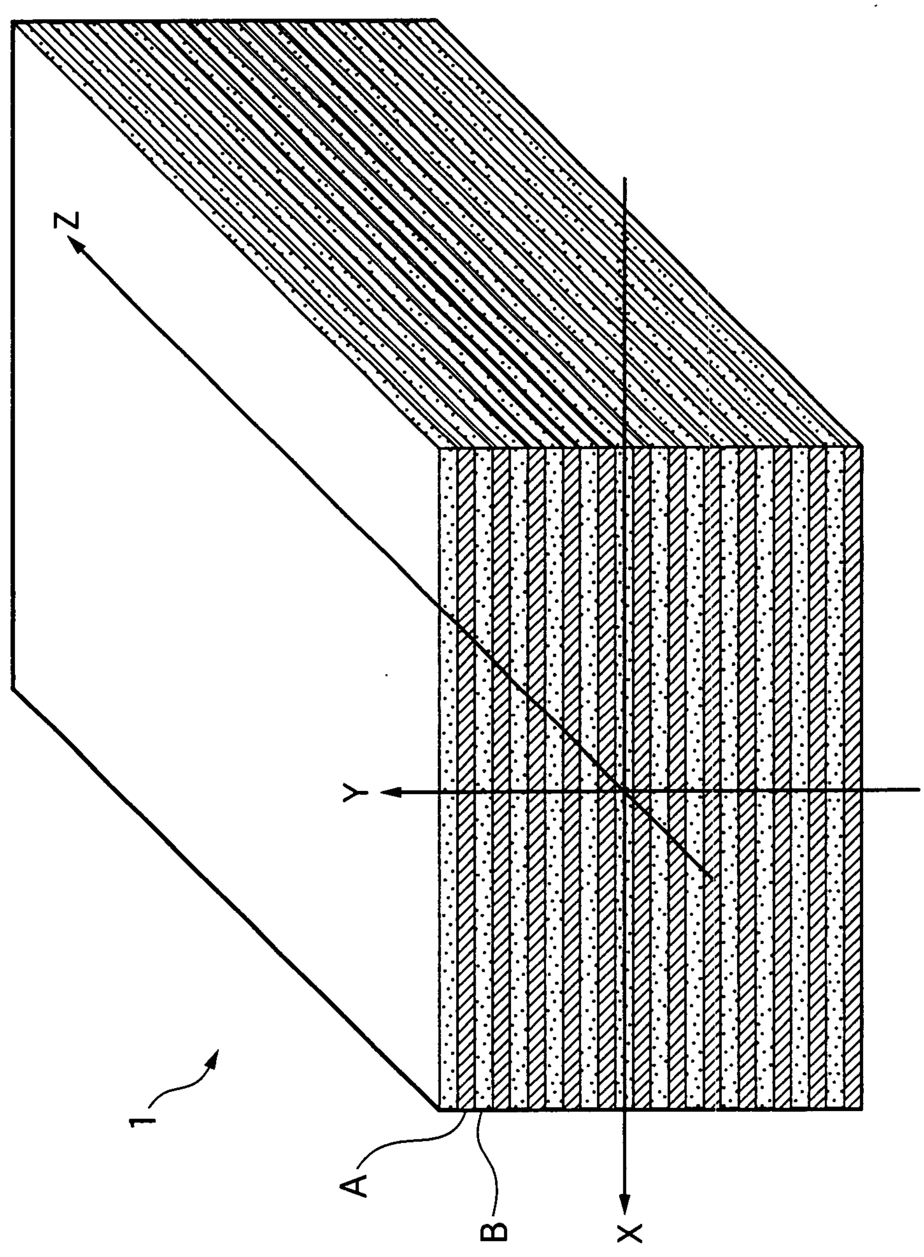

FIG.3

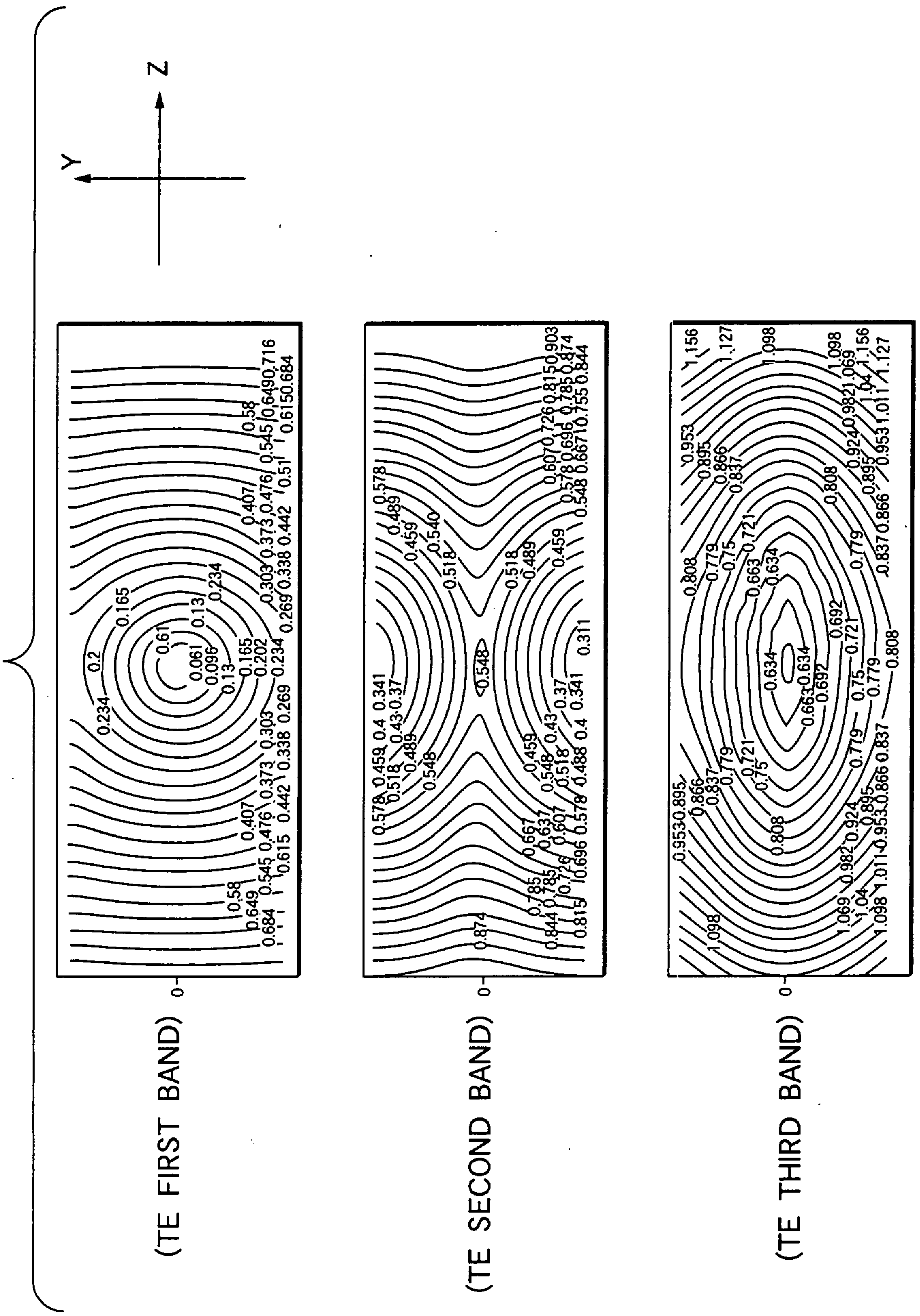

FIG.4

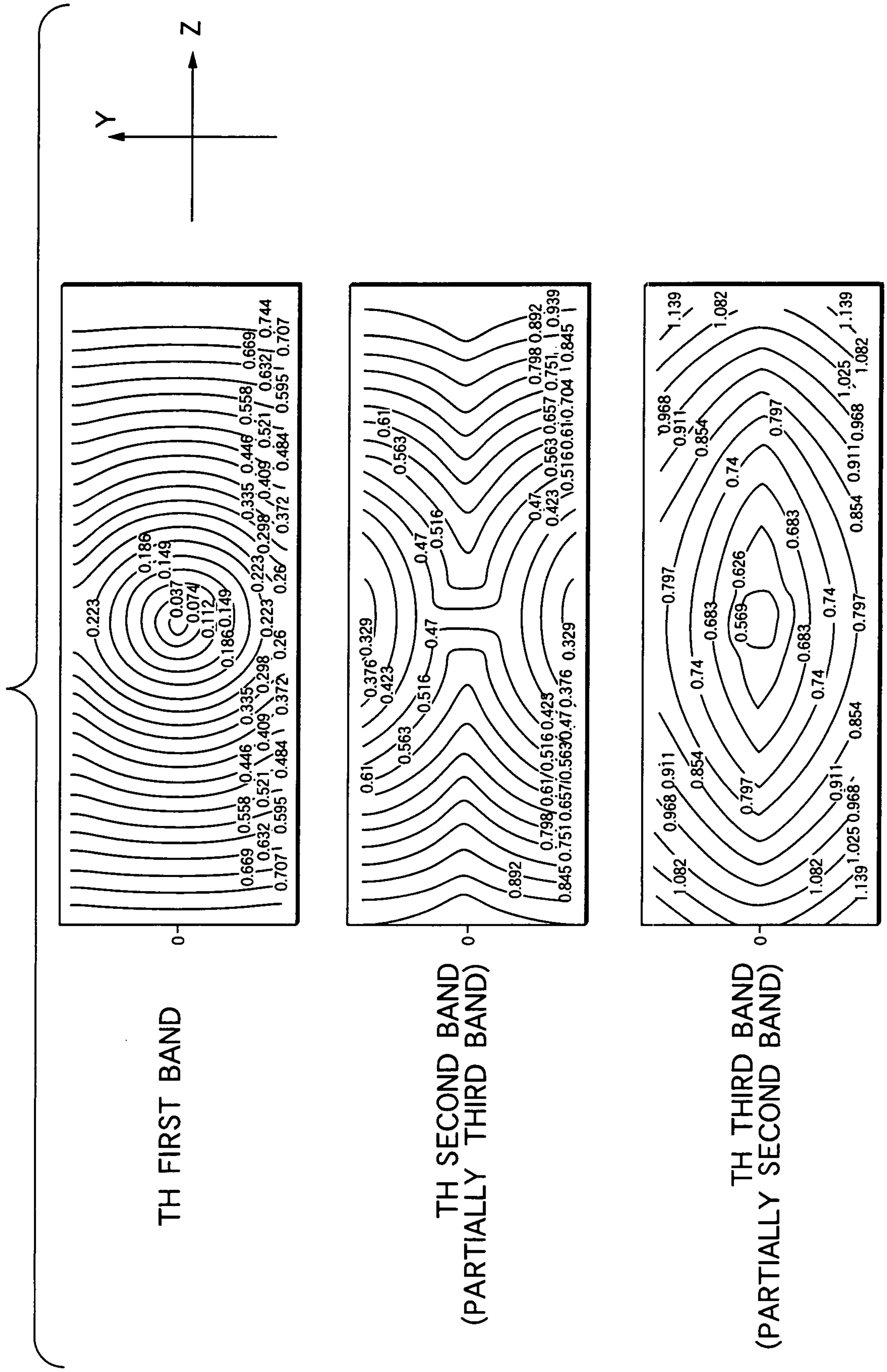
Y
Z
TH FIRST BAND
TH SECOND BAND
(PARTIALLY THIRD BAND)
TH THIRD BAND
(PARTIALLY SECOND BAND)
0
0
0

FIG.5

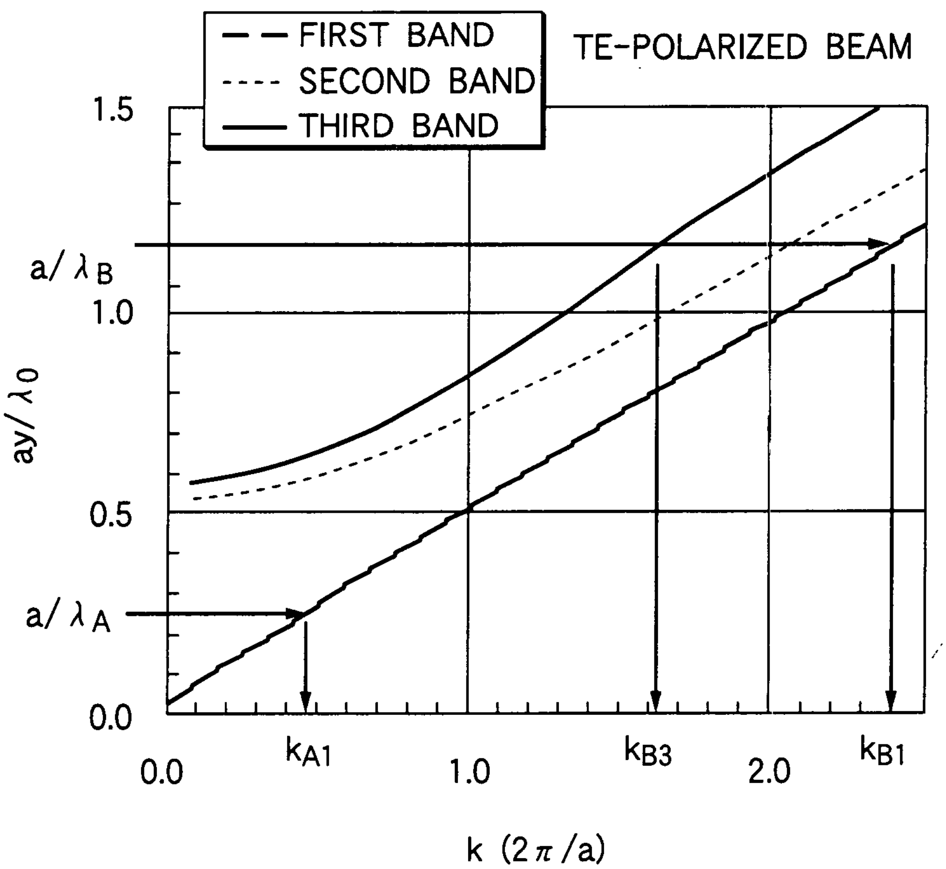
FIRST BAND
SECOND BAND
THIRD BAND
TE-POLARIZED BEAM
1.5
a/λB
1.0
ay/λ0
0.5
a/λA
0.0
0.0
kA1
1.0
kB3
2.0
kB1
k (2π/a)

FIG.6

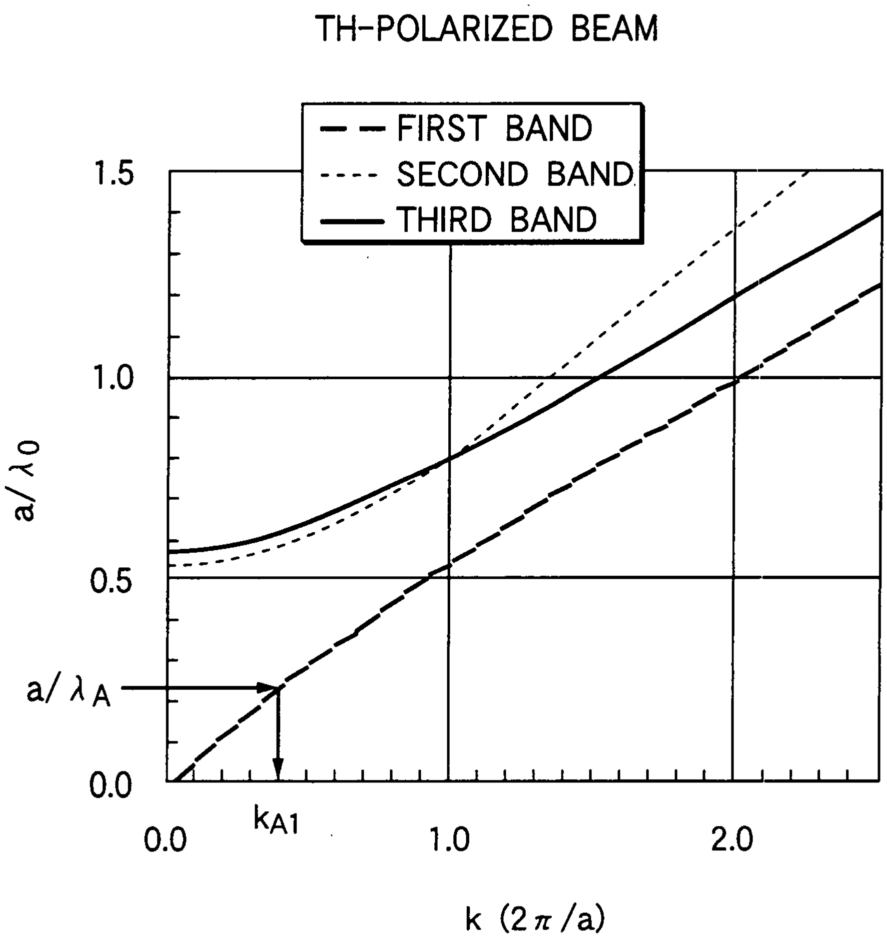
TH-POLARIZED BEAM
FIRST BAND
SECOND BAND
THIRD BAND
1.5
1.0
0.5
0.0
a/λ0
a/λA
0.0
kA1
1.0
2.0
k (2π/a)

FIG.7

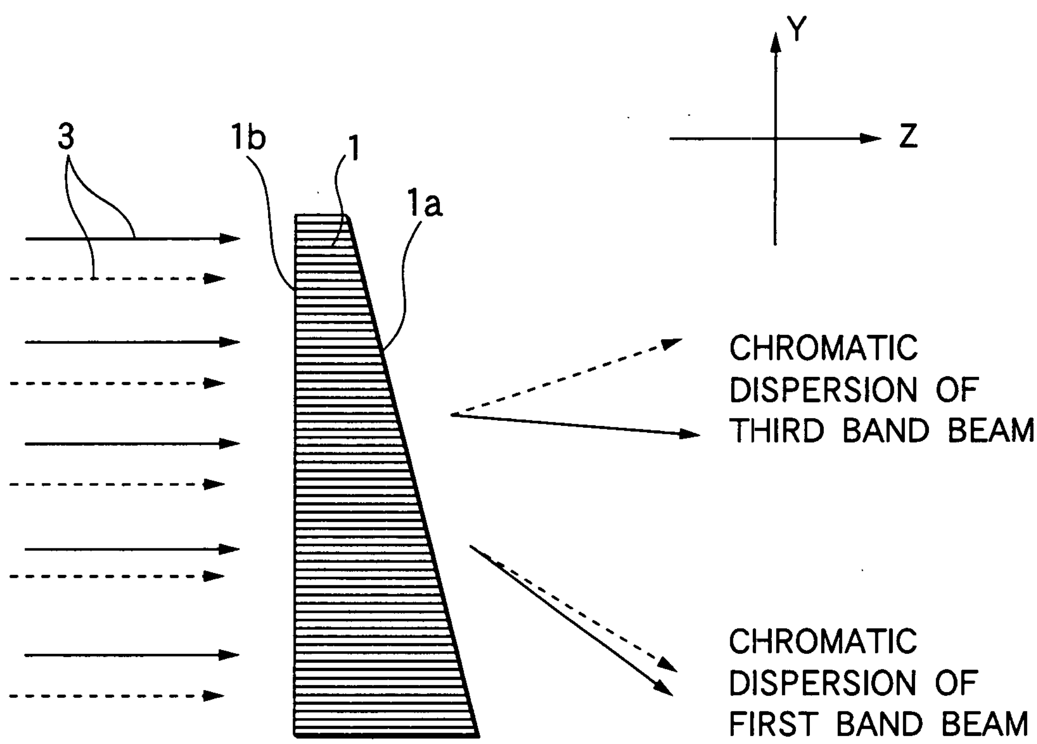
Y
Z
3
1b
1
1a
CHROMATIC DISPERSION OF THIRD BAND BEAM
CHROMATIC DISPERSION OF FIRST BAND BEAM

FIG.8

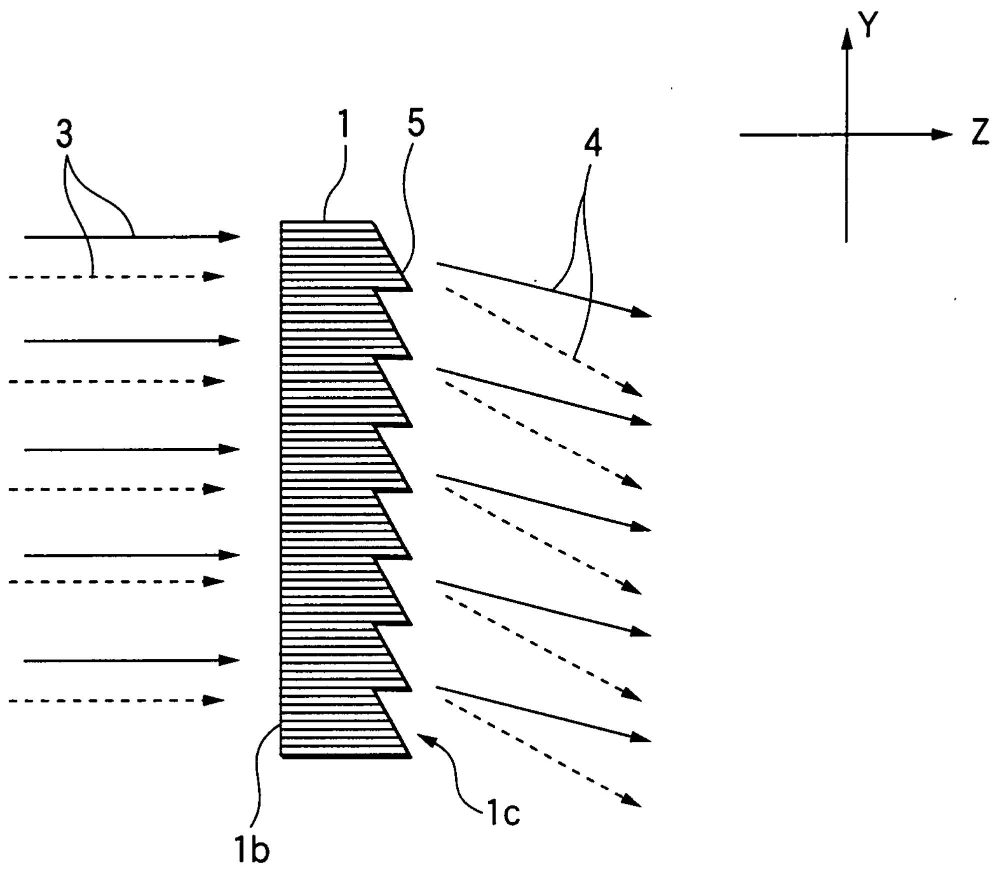

FIG.9

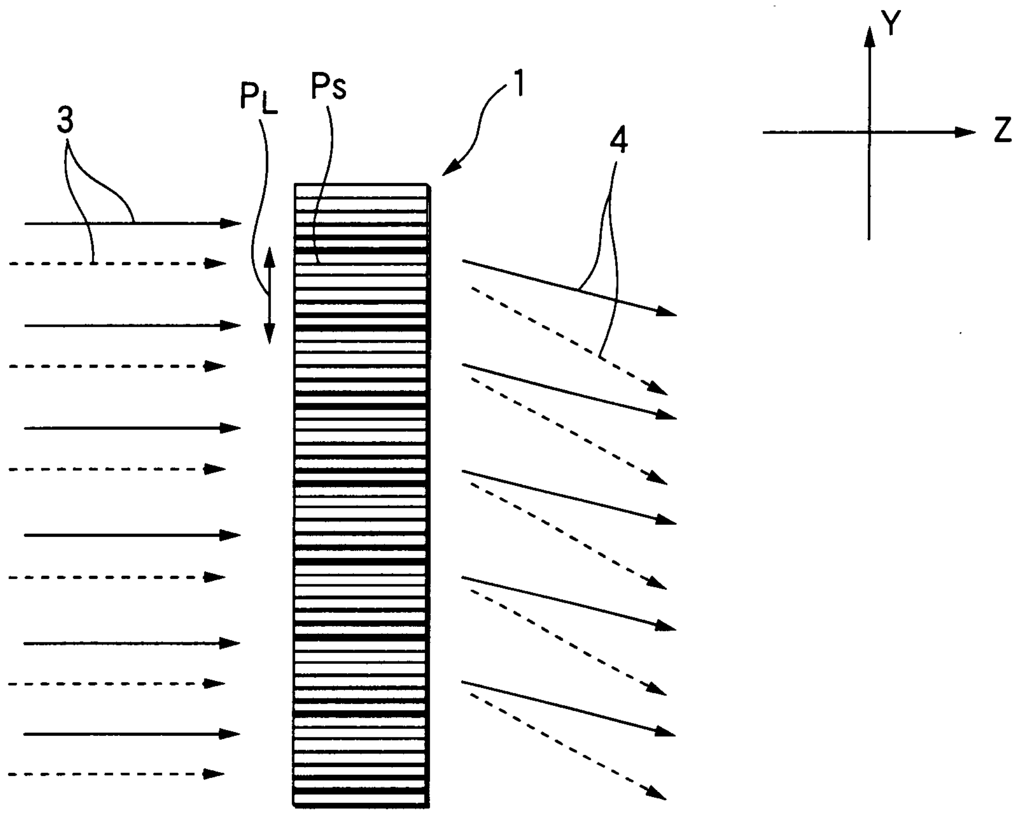

FIG.10

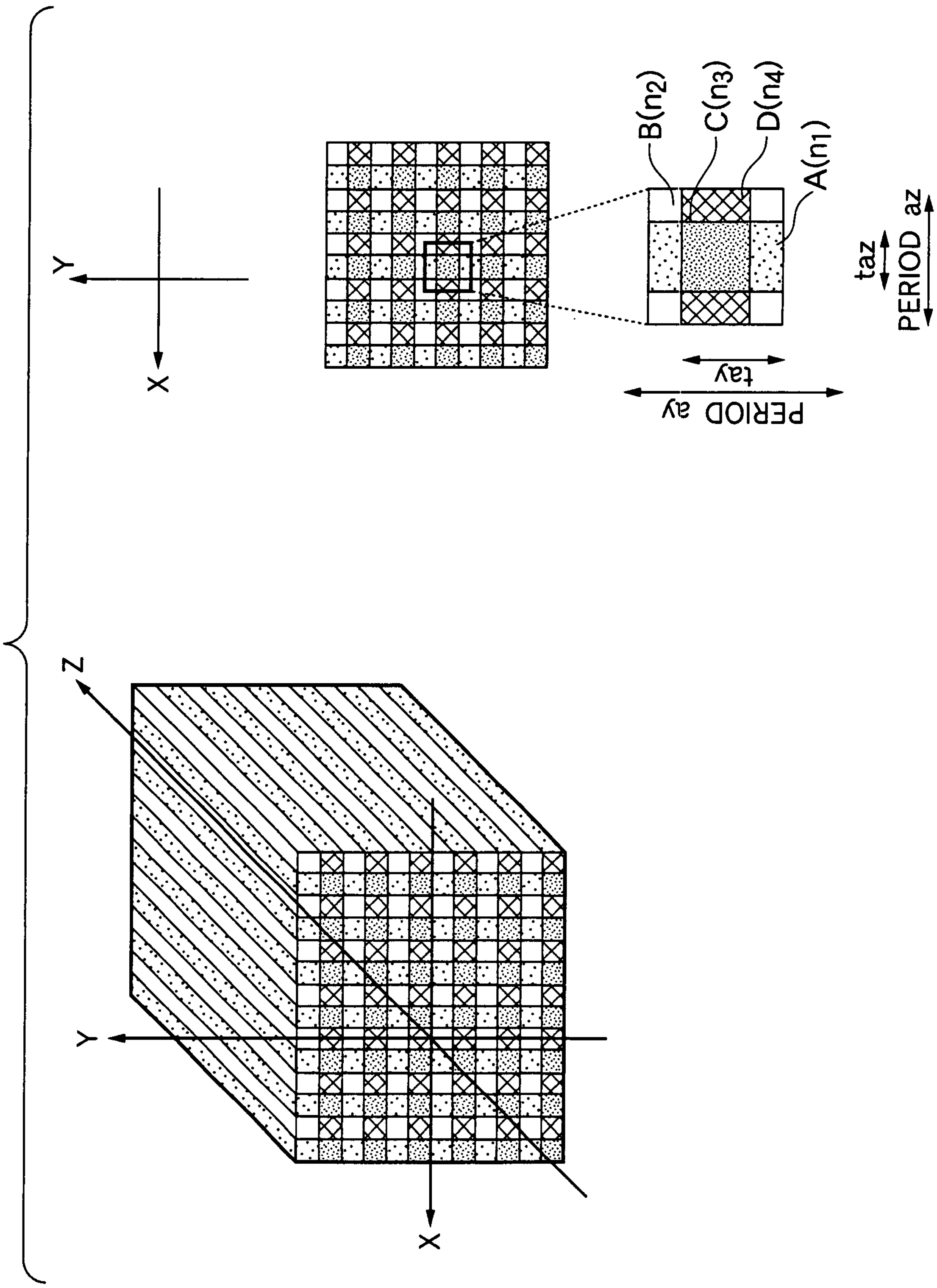

FIG.11

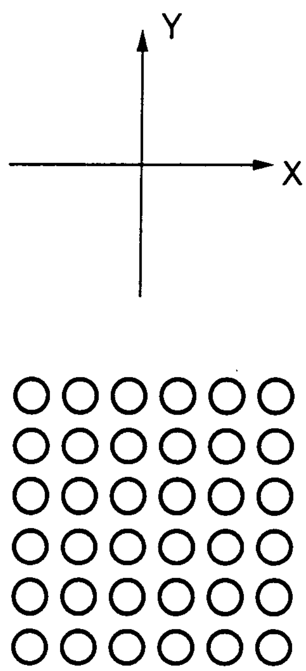

FIG.12

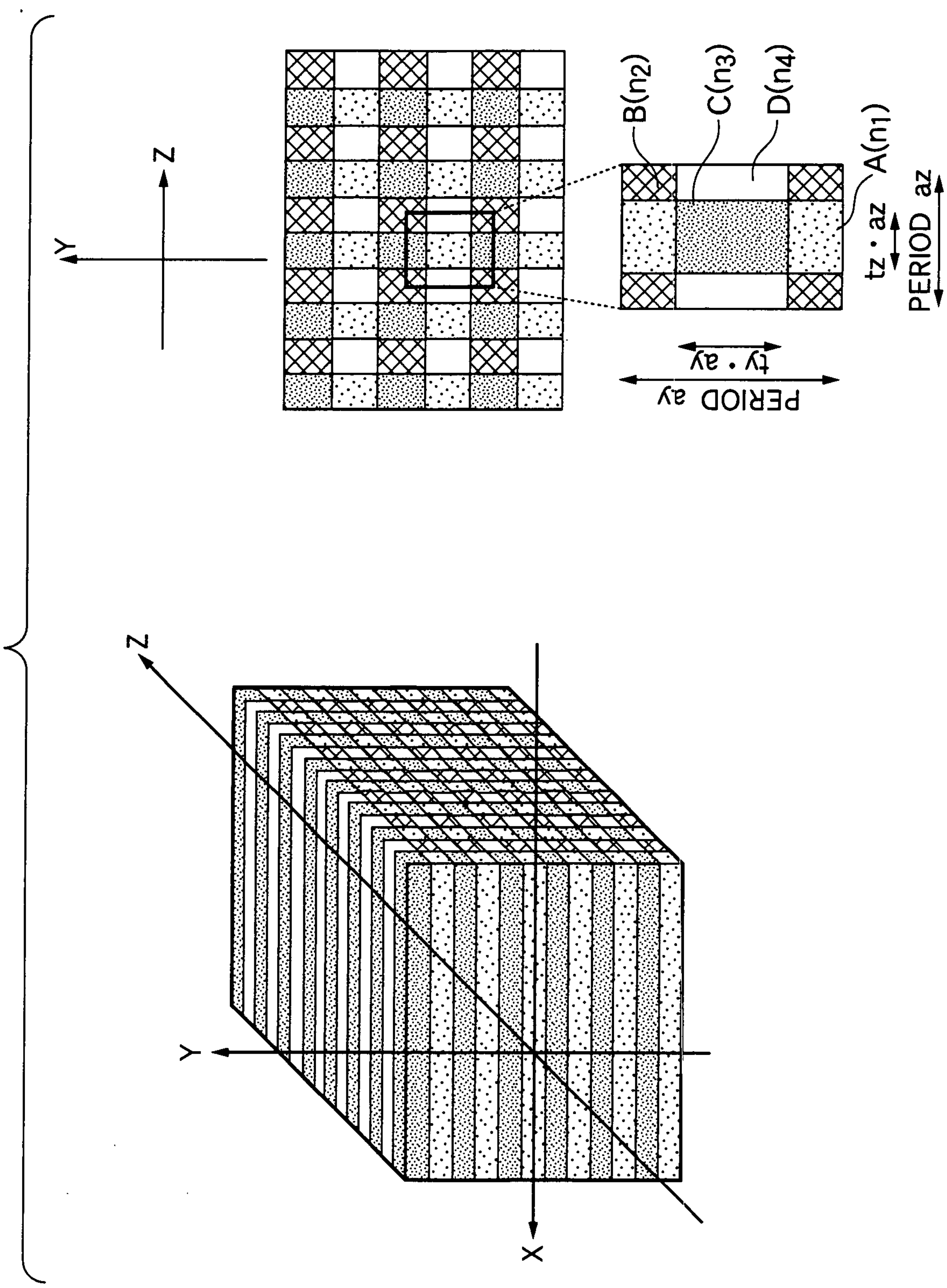

FIG.13

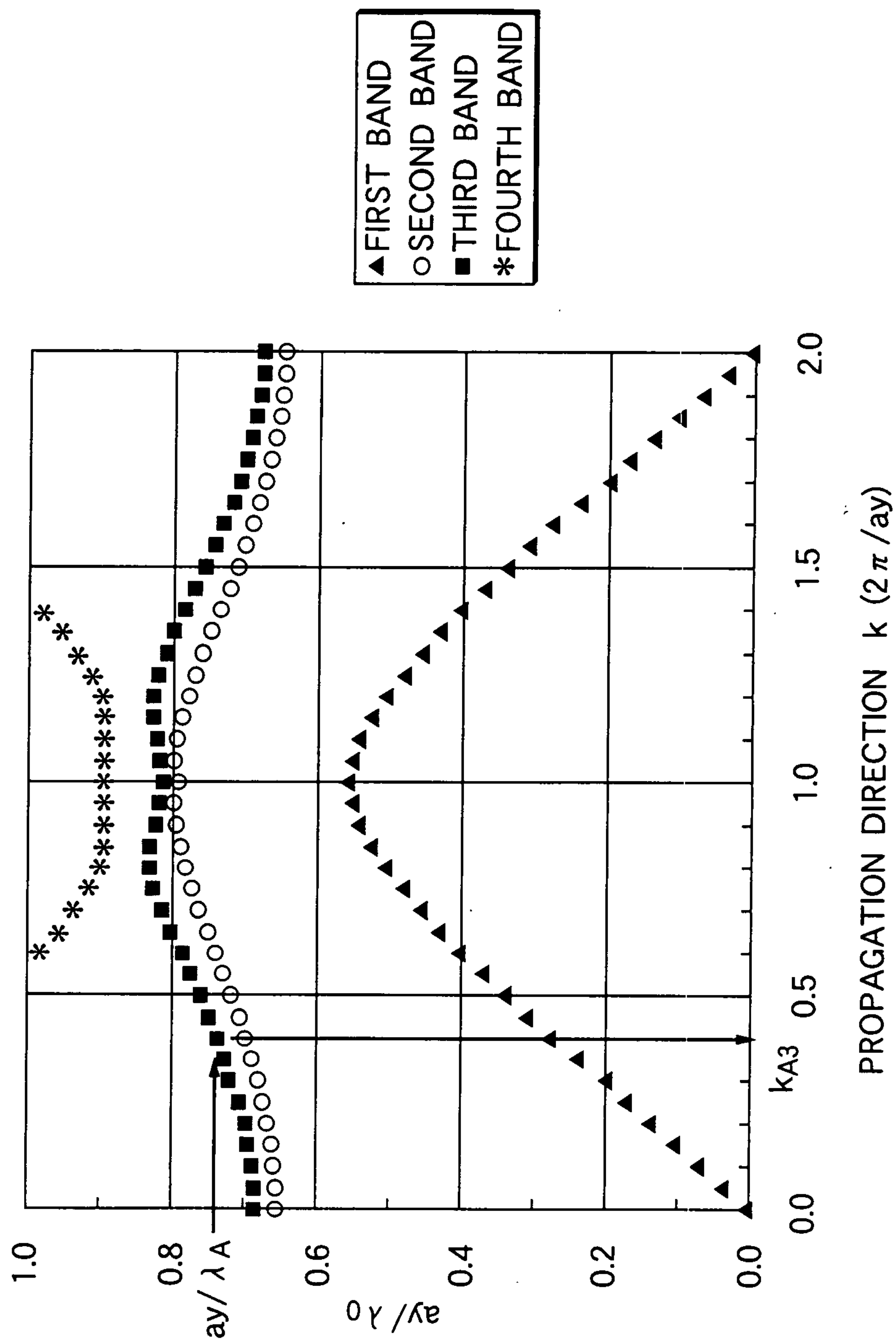
▲FIRST BAND
○SECOND BAND
■THIRD BAND
*FOURTH BAND
ay/λ0
ay/λA
1.0
0.8
0.6
0.4
0.2
0.0
0.0
0.5
1.0
1.5
2.0
kA3
PROPAGATION DIRECTION k (2π/ay)

FIG.14

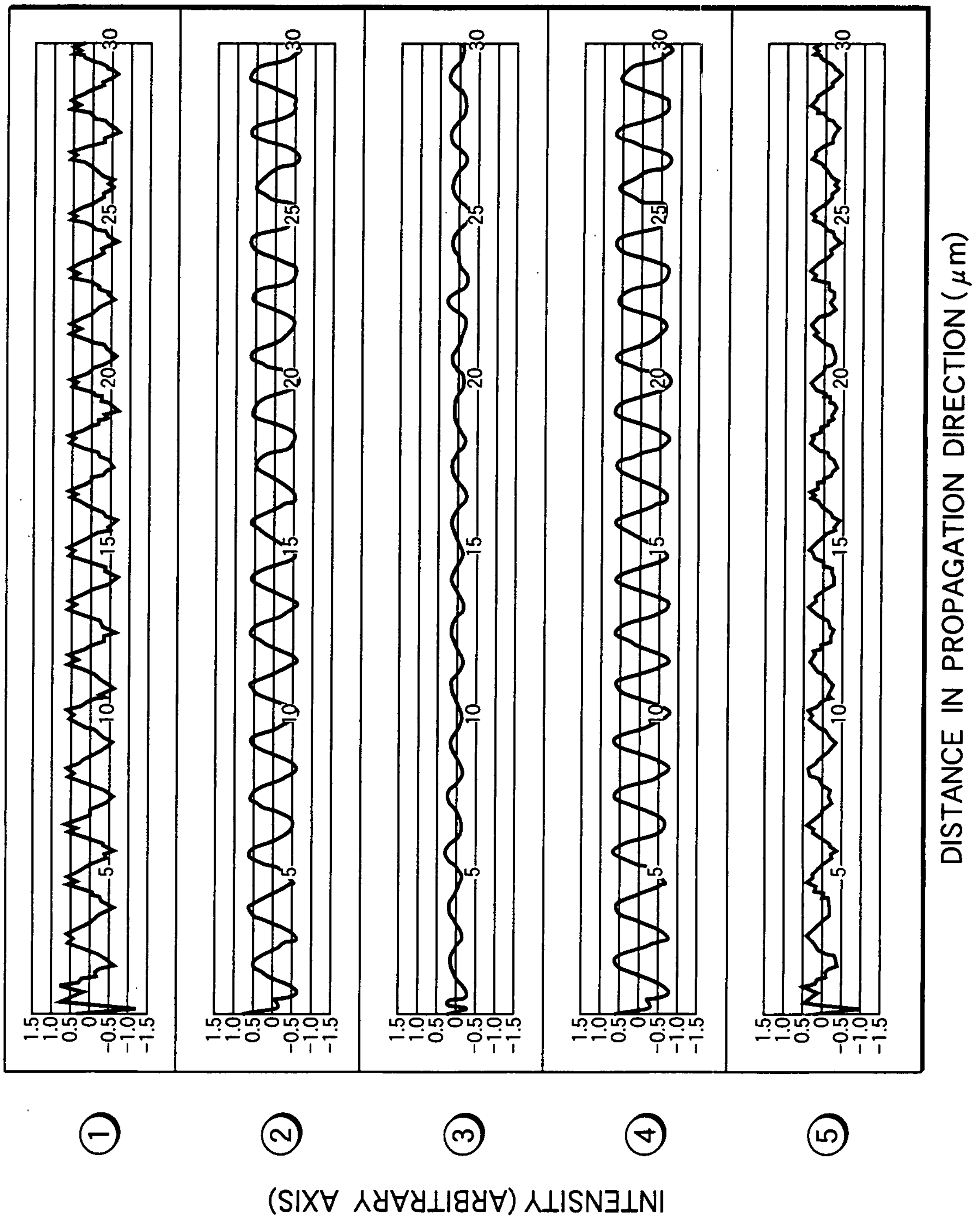

①
②
③
④
⑤
1.5
1.0
0.5
0
−0.5
−1.0
−1.5
5
10
15
20
25
30
DISTANCE IN PROPAGATION DIRECTION (μm)
INTENSITY (ARBITRARY AXIS)

FIG.15

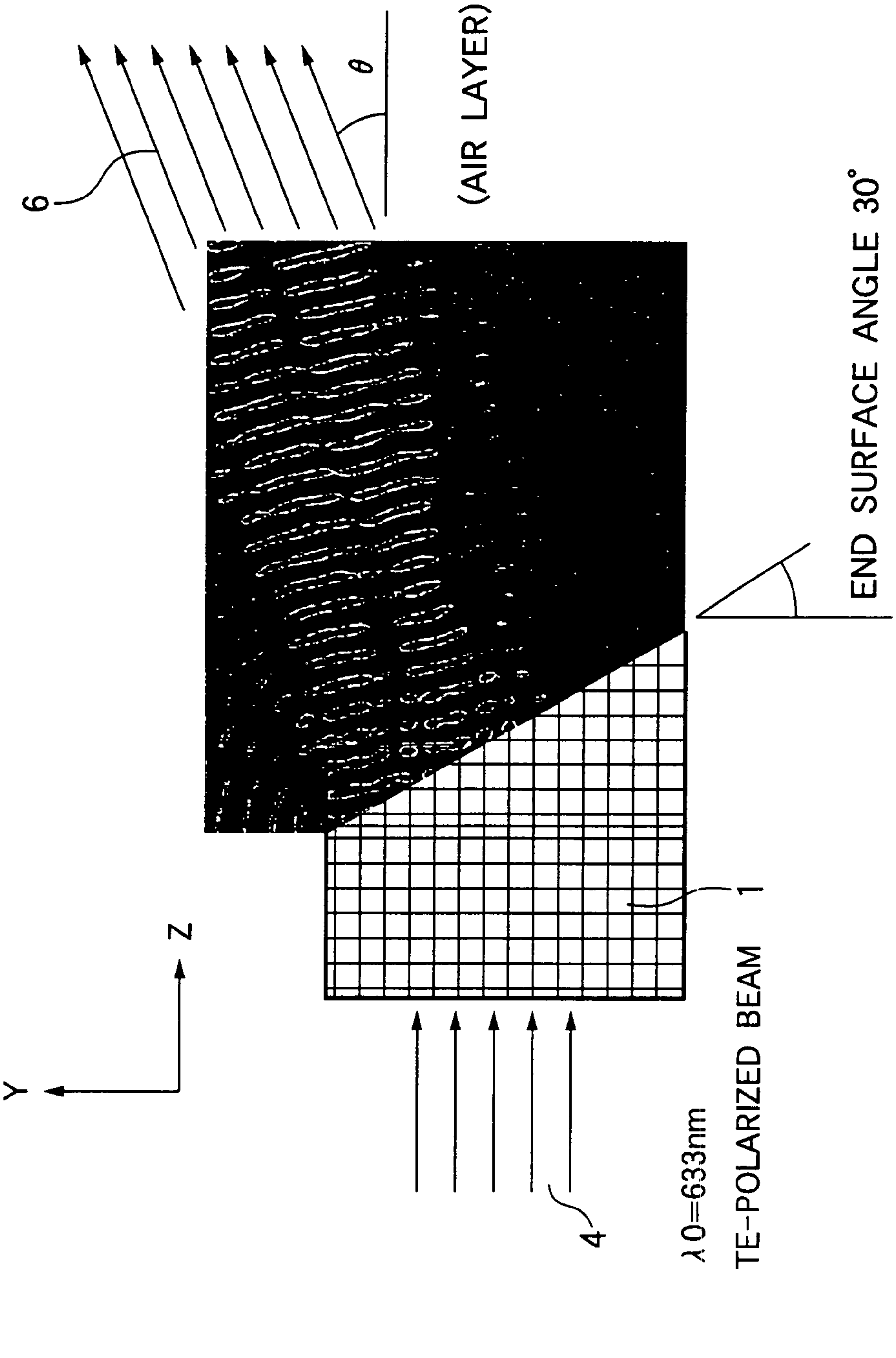
6
θ
(AIR LAYER)
END SURFACE ANGLE 30°
Y
Z
1
4
λ0=633nm
TE-POLARIZED BEAM

FIG.16

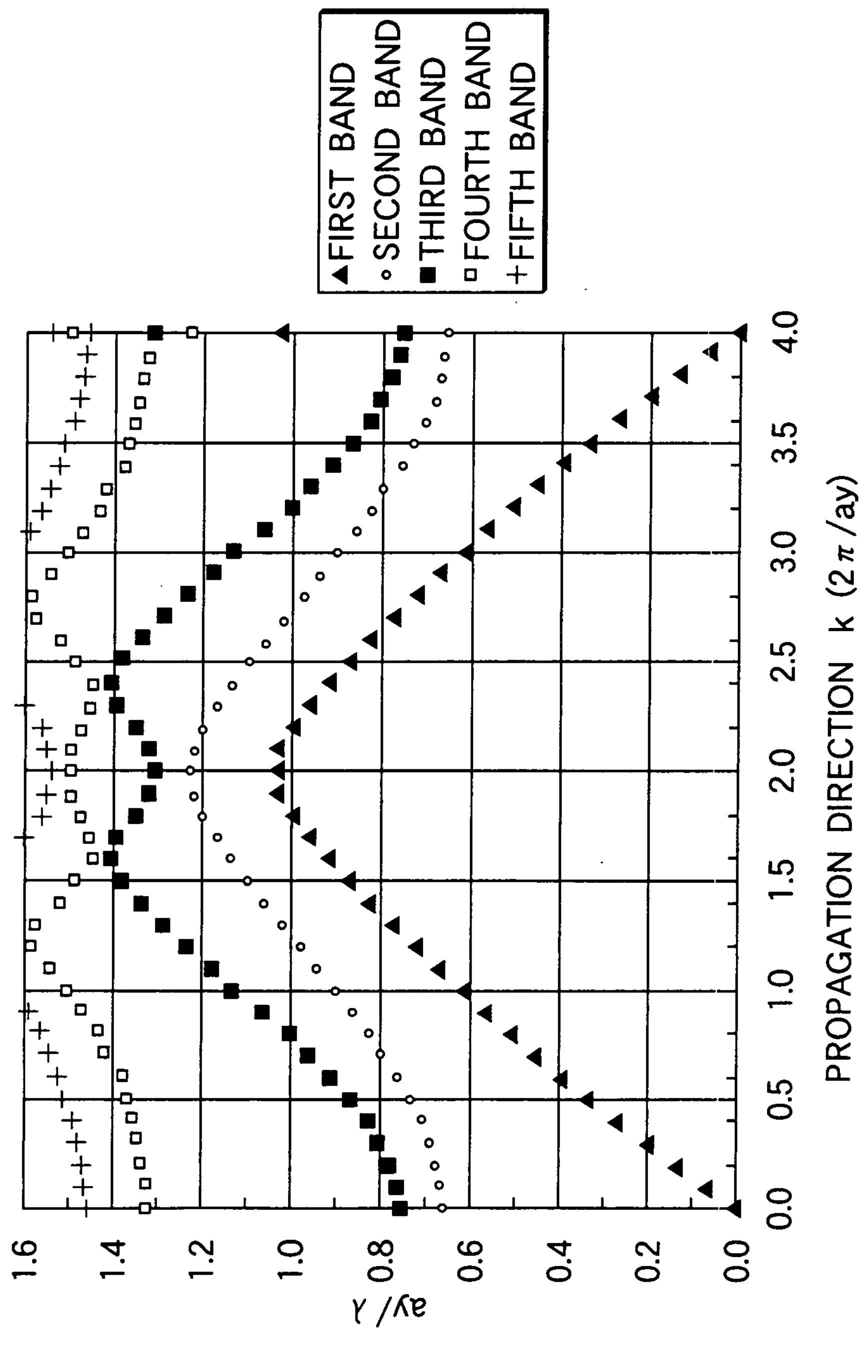
FIRST BAND
SECOND BAND
THIRD BAND
FOURTH BAND
FIFTH BAND
ay/λ
1.6
1.4
1.2
1.0
0.8
0.6
0.4
0.2
0.0
0.0
0.5
1.0
1.5
2.0
2.5
3.0
3.5
4.0
PROPAGATION DIRECTION k (2π/ay)

FIG.17

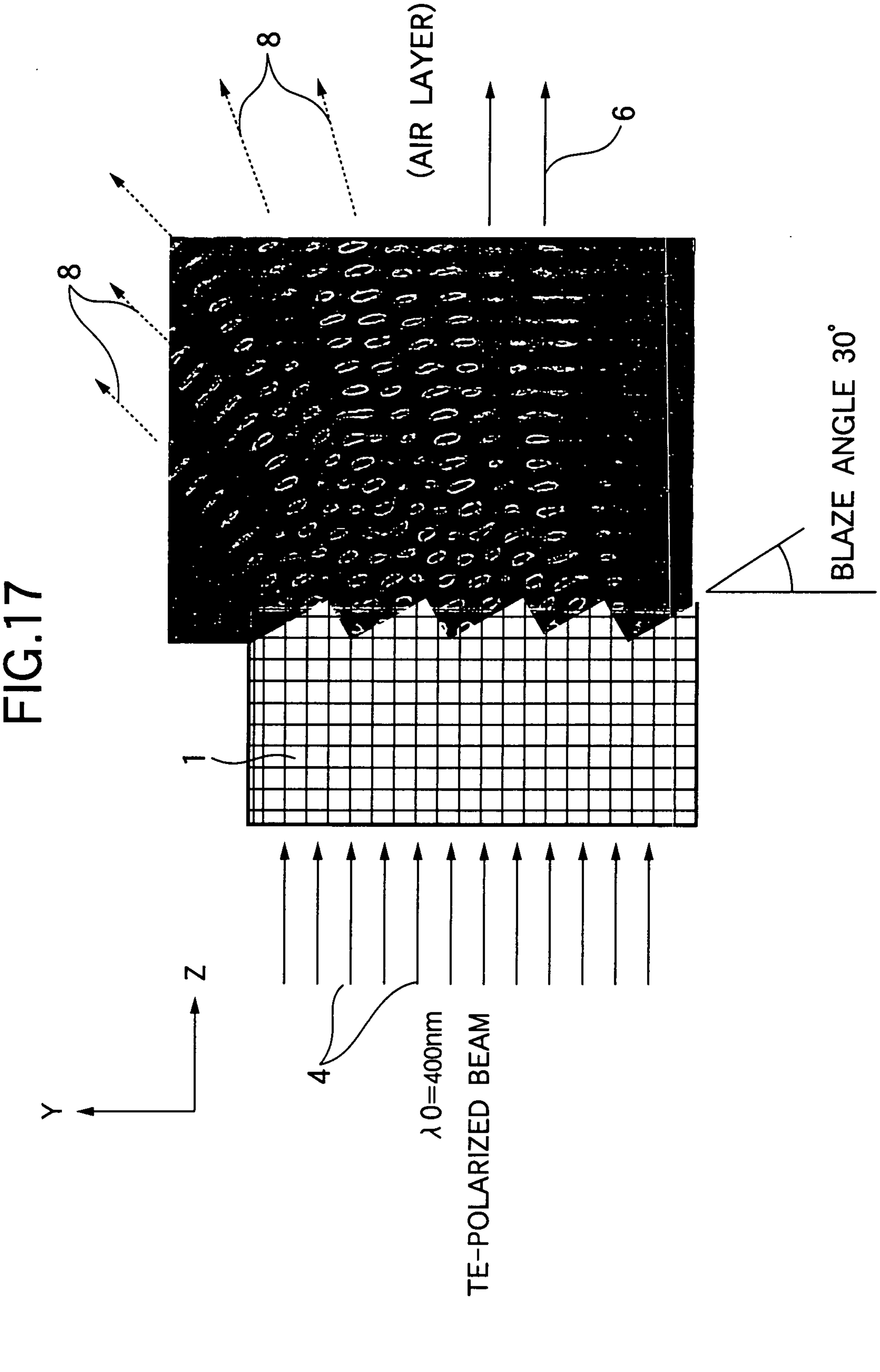

FIG.18

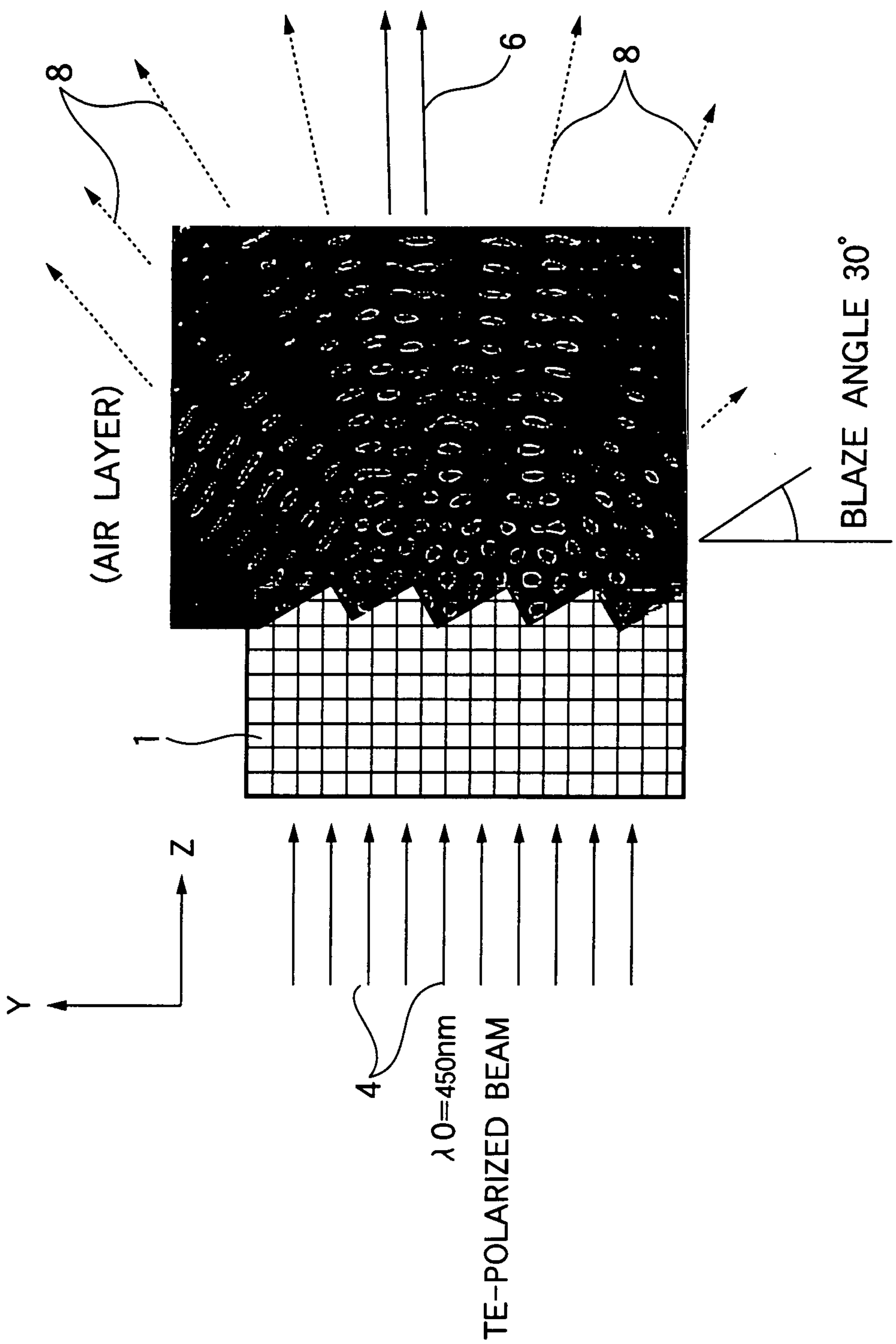

FIG.19

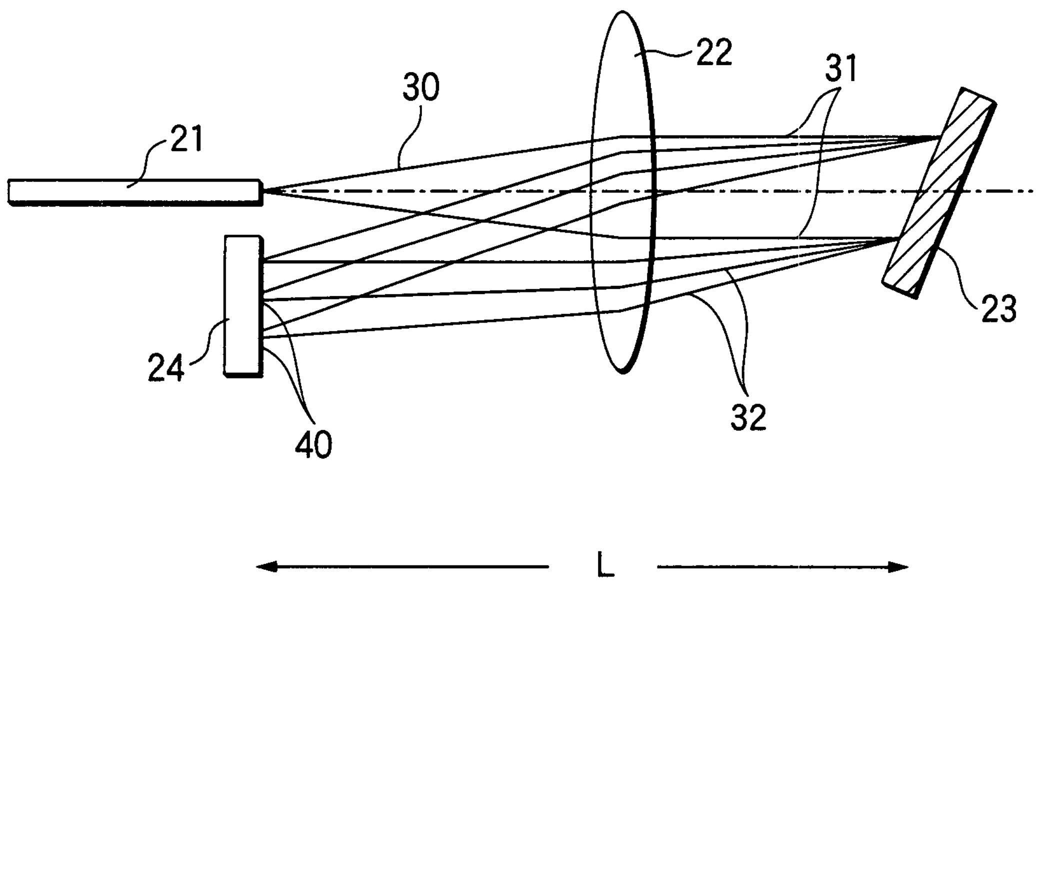

FIG.20

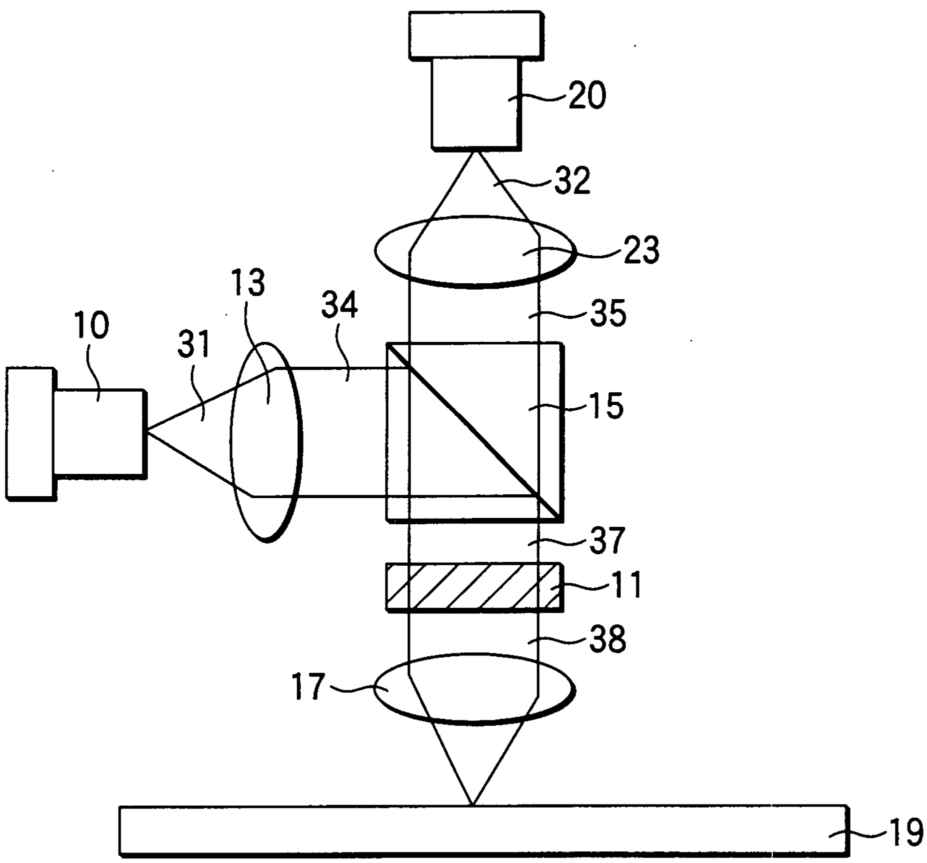

FIG.21